# EUROPÄISCHE PATENTSCHRIFT

(11) **EP 2 476 032 B1**
(45) Veröffentlichungstag und Bekanntmachung des Hinweises auf die Patenterteilung: **21.05.2014**
(21) Anmeldenummer: 10765392.5
(22) Anmeldetag: 09.09.2010
(51) Int. Cl.: G05B 19/418

(54) **VERFAHREN ZUR KONFIGURATION VON SOA-BASIERTEN AUTOMATISIERUNGSGERÄTEN UND ZUR ENTWICKLUNG EINER ORCHESTRIERUNGS-MASCHINE, SOWIE FERTIGUNGSVERFAHREN**
METHOD FOR CONFIGURATION SOA-BASED AUTOMATION DEVICES AND FOR DEVELOPING AN ORCHESTRATION MACHINE, AND PRODUCTION METHOD
PROCÉDÉ DE CONFIGURATION D'APPAREILS D'AUTOMATISATION À BASE SOA ET DE DÉVELOPPEMENT D'UN MOTEUR D'ORCHESTRATION, ET PROCÉDÉ DE FABRICATION

(30) Priorität: 09.09.2009 DE 102009043968
(43) Veröffentlichungstag der Anmeldung: 18.07.2012
(73) Patentinhaber: Schneider Electric Automation GmbH, 97828 Marktheidenfeld (DE)
(72) Erfinder: COLOMBO, Armando Walter, 63791 Karlstein (DE); MENDES, Joao Marco, P-4490-162 Ponte de Lima (PT); BEPPERLING, Axel, 60431 Frankfurt (DE)
(74) Vertreter: Stoffregen, Hans-Herbert
(86) Internationale Anmeldenummer: PCT/EP2010/063264
(87) Internationale Veröffentlichungsnummer: WO 2011/029887

(56) Entgegenhaltungen:
- WO-A1-2009/053472
- ANDREI LOBOV ET AL: "Service oriented architecture in developing of loosely-coupled manufacturing systems", INDUSTRIAL INFORMATICS, 2008. INDIN 2008. 6TH IEEE INTERNATIONAL CONFERENCE ON, IEEE, PISCATAWAY, NJ, USA, 13. Juli 2008 (2008-07-13), Seiten 791-796, XP031316137, ISBN: 978-1-4244-2170-1
- MARCO MENDES J ET AL: "High-Level Petri Nets control modules for service-oriented devices: A case study", INDUSTRIAL ELECTRONICS, 2008. IECON 2008. 34TH ANNUAL CONFERENCE OF IEEE, IEEE, PISCATAWAY, NJ, USA, 10. November 2008 (2008-11-10), Seiten 1487-1492, XP031825637, ISBN: 978-1-4244-1767-4 in der Anmeldung erwähnt
- MARCO MENDES J ET AL: "Software Methodologies for the Engineering of Service-Oriented Industrial Automation: The Continuum Project", COMPUTER SOFTWARE AND APPLICATIONS CONFERENCE, 2009. COMPSAC '09. 33RD ANNUAL IEEE INTERNATIONAL, IEEE, PISCATAWAY, NJ, USA, 20. Juli 2009 (2009-07-20), Seiten 452-459, XP031529555, ISBN: 978-0-7695-3726-9 in der Anmeldung erwähnt
- MARCO MENDES J ET AL: "Composition of Petri nets models in service-oriented industrial automation", INDUSTRIAL INFORMATICS (INDIN), 2010 8TH IEEE INTERNATIONAL CONFERENCE ON, IEEE, PISCATAWAY, NJ, USA, 13. Juli 2010 (2010-07-13), Seiten 578-583, XP031733672, ISBN: 978-1-4244-7298-7

## Beschreibung

Die Erfindung bezieht sich auf ein Verfahren gemäß dem Oberbegriff des Anspruchs 1 sowie auf ein Fertigungsverfahren nach dem Oberbegriff des Anspruchs 12.

In der WO-A-2009/053472 ist ein Verfahren zur Orchestrierung von Services eines Service-orientierten Automationssystems sowie eine Orchestrierungsmaschine beschrieben. Systemkomponenten bieten Ihre Funktionalität als Services an und sind in der Lage, Services anderer Systemkomponenten abzufragen, wobei das Verhalten des Automatisierungssystems durch Orchestrierung der Services der Systemkomponenten mittels einer Orchestrierungs-Maschine gesteuert wird. Um eine Orchestrierung von Services auf Geräte-Level zu erreichen, ist vorgesehen, dass die Orchestrierungs-Maschine auf Service-orientierte Systeme zugeschnittener High-Level-Petri-Netze verwendet und dass die Orchestrierung der Services auf Geräte-Level durch Interpretation und Ausführung von verschiedenen, das Verhalten des Automationssystems und/oder der Systemkomponenten darstellenden HLPN-Modelle erfolgt.

Die WO-A-2009/101212 bezieht sich auf ein Verfahren und ein System zur Einbindung von Service-orientierten Automatisierungskomponenten einer Fertigungsstätte in eine flexible IT-Unternehmensarchitektur. Um flexible Produktionsstätten in Form eines Orchestrationsverfahrens zu konfigurieren und Elemente zu spezifizieren ist vorgesehen, dass die Service-orientierten Automatisierungskomponenten über eine Orchestrations-Middle-Ware mit dem höheren Level gekoppelt werden und dass die von den Service-orientierten Automatisierungskomponenten angebotenen Services unter Verwendung einer vektoriellen Funktion und eines auf Orchestration von Service-orientierten Automatisierungskomponenten basierenden Layouts in das höhere Level integriert werden.

Des Weiteren ist aus der WO-A-2009/103811 ein Service-orientiertes Automatisierungsgerät sowie Verfahren zur Spezifizierung eines Service-orientierten Automatisierungsgerätes beschrieben. Um das Betriebsverhalten von autonomen und kollaborativen Automatisierungsgeräten und Fertigungsstätten mit Service-orientierter Architektur zu beschreiben, werden folgende Verfahrensschritte vorgeschlagen:
ursprüngliches Setup des Automatisierungsgerätes, einschließlich Konfiguration, Darlegung von Services, Etablierung von Verbindungen zu anderen Automatisierungsgeräten und Übergabe des Setups an wartenden ursprünglichen Status, Empfang der Ereignisse über Service-Operationen, interne Geräteschnittstellen von Ein-/Ausgängen und/oder unmittelbar von der Steuerung generiert, Auswerten der empfangenen Ereignisse, Ausführen des Ereignisses und Zustandsänderung der Modellbasierten Middle-Ware-Hülle, wobei das System den nächsten Zustand erreicht und zum Empfang weiterer Ereignisse fähig ist.

Verteilte Anlagen, Bediener, Produkte und Informationen kennzeichnen heute moderne industrielle Produktionssysteme. Sie müssen für Massenproduktion und spezifische Anpassungen in größerem Ausmaß geeignet sein. Eine große Anzahl an Faktoren ist für einen effektiven Betrieb solcher flexiblen Produktionslinien notwendig, unter anderem die Anzahl der Produktoptionen, Fertigungsablauf des jeweiligen Produkts, Produkttyp, Kapazität der Arbeitsstationen, Bearbeitungszeit der Produktionsvorgänge an jeder Arbeitsstation, Kapazität der Materialverarbeitung an jeder Arbeitsstation und die gesamte Materialverarbeitungskapazität. Daher können erhaltene und später zu verarbeitende Daten unabhängig von ihrer großen Menge ständigem Wechsel unterlegen sein.

Komponenten verteilter Software werden bereits in Form von verteilten Objekten, Funktionsblöcken und Services eingesetzt. Letztere in Form einer serviceorientieiten Architektur (SoA; Service-oriented Architecture) und einer service-orientierten Datenverarbeitung (SoC; Services-oriented Computing), das derzeit immer weiter in die industriellen Automationssysteme eindringt. Die Idee des "Service-oriented Computing, das einen Weg bietet, eine neue Architektur zu erschaffen und die Trends der Komponenten hin zu Autonomie und Heterogenität wiedergibt" dominiert die Sichtweise auf die Zukunft. Seine immer stärker werdende Einsetzbarkeit in der Geschäftswelt und im E-Commerce wird als Schritt dahin gesehen, eine nahtlose Integration der Ressourcen aus unterschiedlichen Ebenen zu erreichen. Es werden derzeit zahlreiche Anstrengungen unternommen, diese Gebiete stärker zu erforschen, wie z. B. das Projekt SOCRADES (http://www.socrades.eu)..

Im Allgemeinen betrachtet SoA das System nur aus Sicht seiner Services, ihren Anbietern und Anwendern wird ein geringerer Stellenwert eingeräumt. Diese Entitäten können Automationsgeräte, Softwarekomponenten u.Ä. sein und weisen die spezielle Fähigkeit, Ressourcen innerhalb von Services zu kapseln, auf. Sie stellen einen neuen Ansatz dar und unterscheiden sich grundlegend von speicherprogrammierbaren Steuerungen (PLC, Programable Logic Controllers) im Bereich der Automation. Die Entitäten werden bisweilen als intelligente Geräte bezeichnet, und auch wenn sie unter Umständen anders benannt werden, gleichen sie sich in der Eigenschaft als serviceorientierte autonome Steuerungseinheiten, Geräte, Aktuatoren und Sensoren. Daher werden Service-Computing und Service-Orientierung nicht nur als Kommunikationsform gesehen, sondern eher als eine Philosophie, die Software-Entitäten annehmen sollte, indem sie Ressourcen teilen und ihre Anforderungen zum Ausdruck bringen. Es ist die neue Design- und Denkweise von Automationstechnikern, Manager von Unternehmen und Softwareentwicklern, denen die Erstellung wichtiger Tools und Methodologien auferlegt ist. Serviceorientierte Automationssoftware-Entitäten, die in Ansätzen dieser Art zur Anwendung kommen, erfordern eine Reihe an Methodologien und Software, die sich der Spezifizierung von Computersystemen als auch von eingebetteten Automationsgeräten verschreiben. Diese Anwendungen tragen dazu bei, dass Entwicklungszeiten verkürzt und die Interdependenz der Komponenten verringert werden, wodurch genügend Flexibilität für die automatische Neukonfiguration von Produktionsanordnungen erreicht wird.

Hinsichtlich der Technologie wurde das Device Profile for Web Services (DPWS) als Standard in diesem Projekt festgelegt. Da es nur einige bestimmte Protokolle beschreibt, muss ein kompatibles Framework verwendet werden, um die Kommunikation der Softwarekomponenten in der gleichen Sprache serviceorientiert zu gewährleisten. Eines der implementierten Systeme ist die SOA4D (serviceorientierte Architektur für Geräte) (https://forge.soa4d.org/), die auf größere Computersysteme (z. B. PC) und eingebettete Geräte abzielt.

Davon ausgehend liegt der vorliegenden Erfindung das Problem zugrunde, ein Verfahren zur Konfiguration von SOA-basierten Automatisierungsgeräten und zur Entwicklung einer Orchestrierungs-Maschine derart weiterzubilden, dass die Möglichkeit gegeben wird, jede Komponente eines Systems einzeln zu modellieren und mit logischen Schnittstellen auszustatten und wobei eine automatisierte Komposition der Modelle der Komponenten zu einem statischen Gesamtmodell des Systems ermöglicht wird.

Des Weiteren liegt der Erfindung die Aufgabe zugrunde, ein Fertigungsverfahren sowie ein Fertigungssystem basierend auf implementierten Orchestrierungs-Maschinen zur Verfügung zu stellen, welches Konfliktlösungs-Mechanismen bereitstellt.

Die Aufgabe wird erfindungsgemäß unter anderem durch ein Verfahren zur Konfiguration eines eine Orchestrierungs-Maschine aufweisende Automatisierungsgeräts durch die Merkmale des Anspruchs 1 gelöst.

Des Weiteren wird die Aufgabe unter anderem durch ein Fertigungsverfahren mit den Merkmalen des Anspruchs 13 sowie durch ein Fertigungssystem mit den Merkmalen des Anspruchs 19 gelöst.

Das Fertigungssystem (DAS) umfasst:
eine Mehrzahl von mechatronischen Komponenten bzw. Geräten (C1-C11, L1, L2, W1, W2, MC) wie Transporteinheiten, Lifter, Arbeitsstationen, die gemeinsam arbeiten, um Produkte zu fertigen,
eine Mehrzahl von Automatisierungsgeräten (STB) zur Steuerung der mechatronischen Komponenten bzw. Geräte (C1-C11, L1, L2, W1, W2, MC), wobei eine Gruppe von mechatronischen Komponenten bzw. Geräten oder eine mechatronische Komponente bzw. Gerät jeweils einem der Automatisierungsgeräte (STB) zugeordnet ist,
wobei die Automatisierungsgeräte (STB) über ein Netzwerk (N) miteinander und mit einem Produktions-Ausführungs-System (PES) zum Austausch von Nachrichten miteinander verbunden sind,
wobei das einer mechatronischen Komponente bzw. Gerät oder einer Gruppe von mechatronischen Komponenten bzw. Geräten zugeordnete Automatisierungsgerät (STB) derart konfiguriert ist, dass die mechatronische Komponente bzw. das Gerät oder die Gruppe von mechatronischen Komponenten bzw. Geräten als logisches Gerät und Funktionen der mechatronischen Komponente bzw. Gerät oder der Gruppe von mechatronischen Komponenten bzw. Geräten als Elementar-Service (S) in dem Netzwerk (N) abrufbar sind,
wobei das Fertigungssystem (DAS) zumindest zwei implementierte Service-Orchestrierungs-Engines (OE) aufweist, wobei jedes Service-Orchestrierungs-Engine (OE) derart konfiguriert ist, dass Elementar-Services (S) einer fertigungstechnisch zusammengehörigen Gruppe von mechtronischen Komponenten bzw. Geräten auf der Grundlage von miteinander verbundenen bzw. synchronisierten Orchestrierungs- bzw. Verhaltensmodellen orchestriert und in dem Netzwerk (N) dargestellt werden.

Vorzugsweise ist die Orchestrierungs-Engine (OE) über das Netzwerk (N) mit einem Entscheidungshilfesystem (DSS) gekoppelt ist, welches in dem Produktions-Ausführungs-System (PES) implementiert ist, wobei bei Ausführung des in der Orchestrierungs- Engine (OE) implementierten Orchestrierungs- bzw. Verhaltensmodells bei Auftreten von Konflikten an Konfliktknoten Entscheidungshilfen abfragbar sind.

Die modelbasierte Service-Orchestrierungs-Maschine nutzt als Modellirungs- und Logiksprache einen Petri-Netz Dialekt: High-Level-Petri-Net (HL-PN). Die HL-PN wurde um Elemente erweitert, um Web-Service spezifische Eigenschaften direkt im HL-PN Model abzubilden: Service- und Datenkontrakte (Service and data contracts), sowie Konfiguration der DPWS Discovery. Die Modelle können allerdings auch um weitere Eigenschaften erweitert werden. Neben DPWS-konformen Web Services können auch andere Nachrichten- bzw. Ereignis-orientierten Kommunikationsschichten konfiguriert werden.

Petri-Netze sind geeignet, konkurrierende und nebenläufige Prozesse mit verteilten Ressourcen abzubilden, welche auf einer limitierten Menge an Software und Hardware Ressourcen operieren. Der grundlegende Ansatz ist, jede Komponente eines Systems einzeln zu modellieren und mit logischen Schnittstellen auszustatten, welche eine (automatisierte) Komposition der Modelkomponenten zu einem statischen Gesamtmodel des Systems erlauben. Es werden entsprechend der realen Topologie des Systems die Modelinstanzen miteinander verschaltet. Dadurch, dass die Komponentenmodelle alle Schnittstellen bereitstellen, enthält das Gesamtmodel alle prinzipiell möglichen Ablaufpfade. Am Beispiel eines Materialflusssystems bedeutet dies, dass ein aus Transportkomponenten bestehendes System alle Flusspfade enthält, welche durch die Verbindung der Transportelemente auch einen physikalischen Transport von Material ermöglichen. Im Trivialfall kann das System lineare Pfade enthalten und somit der Prozess quasi sequentiell ablaufen, in komplexeren Kompositionen könnte der Prozess etliche Pfade mit mehreren Gabelungen und Verbindungen enthalten, wodurch zur Laufzeit alternative Ablaufpfade gewählt werden können. Die Gabelungen und Verbindungen in solch komplexen Prozessen werden als Konfliktknoten (conflict nodes) im Petri-Netz modelliert. Konflikte in einem Petri-Netz Model können unterschiedliche Bedeutungen im realen System haben. Beispielsweise könnte eine Palette auf einem Transportelement in verschiedene Richtungen transportiert werden, oder, zwei Teilprozesse "konkurrieren" um dieselbe Ressource.

Einige Probleme können durch einfache Algorithmen gelöst werden, z.B. zufällige Auswahl eines Prozesspfades, allerdings sind solche Lösungen global gesehen ineffizient, oder sogar gefährlich für bestimmte Topologien, da dort Dead-locks entstehen und der Prozess blockiert ist. Somit ist klar, dass Teilprozesse nicht nur lokal begrenzt synchronisiert werden dürfen, sondern in einem erweiterten Kontext. Diese Probleme sind nicht neu und schon durch Enterprise Resource Planning ERP / Manufacturing Execution System (MES) wenigstens teilweise gelöst.

Für die Orchestiierungs-Maschine und ein "orchestriertes" System von Services wurde eine Architektur gewählt, welche eine Abtrennung der Entscheidungsalgorithmen und der Service Orchestrierung ermöglicht. Es existiert eine spezielle Schnittstelle zwischen der Orchestrierungs-Maschine und dem sogenannten Entscheidungs-Hilfe-System (Decision-Support-System), um Entscheidungsanfragen, -antworten und Metadaten für die Entscheidungsfindung auszutauschen. Auf der Ebene der Orchestrierung werden sog. lokale Entscheidungen getroffen, welche auf einfachen Algorithmen beruhen und beispielsweise dann eingreifen, um Konflikte kurzerhand aufzulösen, wenn das übergeordnete Decision-Support-System (DSS) keine Entscheidung getroffen hat. Auf unterer Ebene werden also Entscheidungen getroffen, welche rein auf Kenntnis der Modelle und dem aktuellen Zustand der Modelle beruhen.

Aus Sicht der Orchestrierung (bottom-up) kapselt das DSS die oberen Systeme als Service für Entscheidungsfindung, ohne zu wissen, auf welchen Algorithmen die Entscheidung beruht.

Aus Sicht eines Enterprise Ressource Planning (ERP) (top-down) kapselt das DSS das Produktions- bzw. Fertigungssystem als Manufacturing Execution System (MES) Service mit Schnittstellen für Produktionsauftragseingang und Produktionsüberwachung. Das ERP System hat keine detaillierten Kenntnisse über die Automatisierungsprozesse, sondern lediglich über Produktionsaufträge und deren Status.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung von der Zeichnung, zu entnehmenden bevorzugten Ausführungsformen.

Es zeigen:
- Fig. 1: eine Hardware eines Fertigungssystems,
- Fig. 2: ein Schema und ein Layout eines Fertigungssystems gemäß Fig. 1,
- Fig. 3: einen modularen Aufbau des Fertigungssystems,
- Fig. 4: Typen der Transfereinheiten in dem Fertigungssystem,
- Fig. 5: schematische Darstellung eines Automatisiemngsgeräts STB,
- Fig. 6: schematische Darstellung einer kollaborativen Einheit,
- Fig. 7: schematische Darstellung des Fertigungssystems mit den verbundenen Geräten,
- Fig. 8: Verwendung von Automatisierungsgeräten STB und Identifikationssystem OSI im Fertigungssystem,
- Fig. 9: einen Ansatz zur Service-Orchestrierung,
- Fig. 10: ein Konzept eines Automations-Bot's,
- Fig. 11: Haupt-Software-Komponenten eines Continuum-Projekts,
- Fig. 12: ein Klassendiagramm und Realisierungen des Continuum-Bot-Frameworks,
- Fig. 13: ein Screenshot eines simulierten Petri-Netzes im Continuum Development Studio,
- Fig. 14: schematische Darstellung von Konfigurations- und Einsatztools zur Konfiguration eines Automatisierungsgerätes,
- Fig. 15: ein Kommunikationsdiagramm,
- Fig. 16: ein schematischer Überblick betreffend einer Produktionsausführung,
- Fig. 17: ein Kommunikationsdiagramm betreffend die Erstellung eines neuen Auftrags und Benachrichtigung eines ERP-Systems während der Produktion,
- Fig. 18: ein Kommunikationsdiagramm betreffend Benachrichtigung des ERP-Systems, wenn ein Einzel-Produkt hergestellt wird,
- Fig. 19: ein Kommunikationsdiagramm betreffend eine vollständige Produktion,
- Fig. 20: eine Struktur einer Datenbank des Produktions-Ausführungs-Systems PES,
- Fig. 21: schematische Darstellung von Petri-Netz-basierten Orchestrierungs-Tools und deren Engineering,
- Fig. 22: schematische Darstellung von Engineering-Schritten mit dem Continuum-Ansatz,
- Fig. 23: eine Nachrichtensequenz für Betriebsvorgänge der Transfereinheiten,
- Fig. 24: eine Nachrichtensequenz für Betriebsvorgänge der Lifter,
- Fig. 25: eine schematische Darstellung einer Service-Landschaft des Fertigungssystems,
- Fig. 26: eine schematische Darstellung eines Geräte-Verbindungsansatzes auf der Grundlage des verteilten dynamischen Orchestrierungsansatzes,
- Fig. 27 a)-d): Orchestrierung von Transfereinheiten und Liftern,
- Fig. 28: schematische Darstellung von Verbindungen von Verhaltensmodellen und Erzeugung von Orchestnerungs-Services,

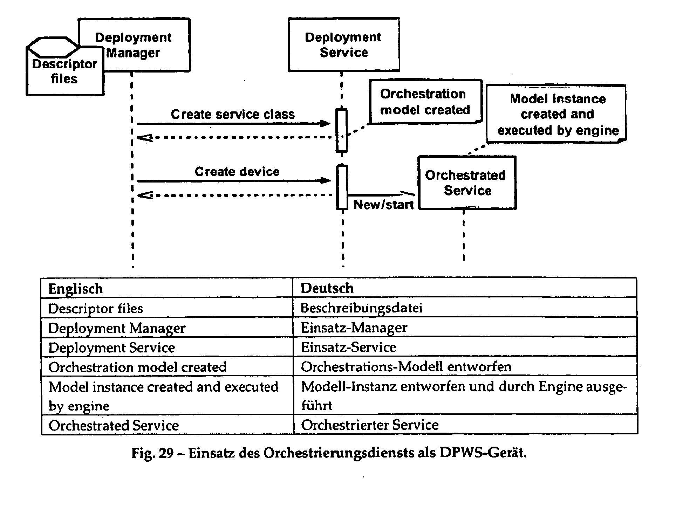

- Fig. 29: Kommunikationsschema betreffend Einsatz des Orchestrierungs-Services als DPWS-Gerät,
- Fig. 30: Kommunikationsschema betreffend Start der Ausführung des Orchestrierungs-Services,
- Fig. 31: Kommunikationsschema betreffend des Runterfahrens des Orchestrierungs-Services,

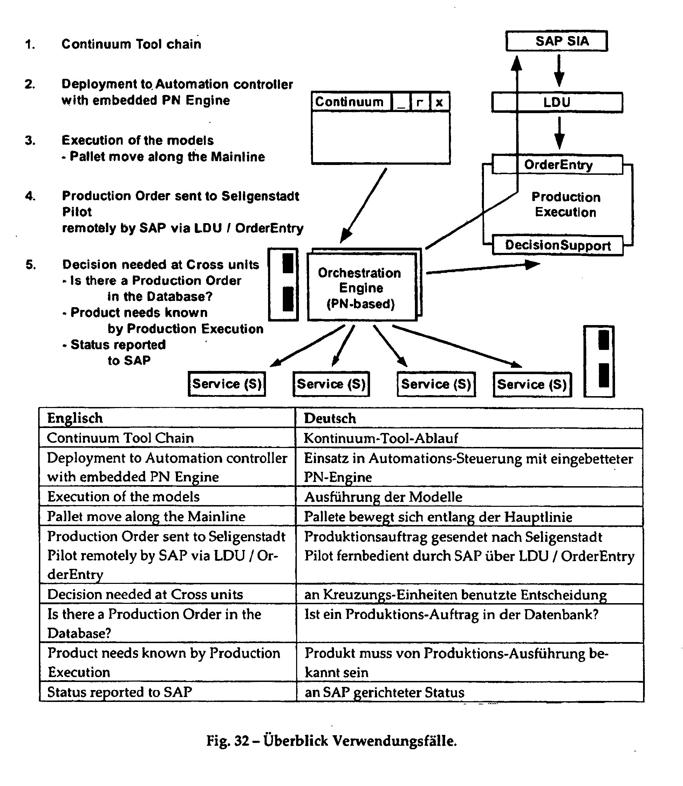

- Fig. 32: schematische Darstellung des Fertigungssystems mit Produktionsausfühungseinheit;
- Fig. 33: schematische Darstellung von Schnittstellen des Produktions-Ausführungs-Systems PES,
- Fig. 34: schematische Darstellung einer Konfliktsituation an einem Konfliktknoten und

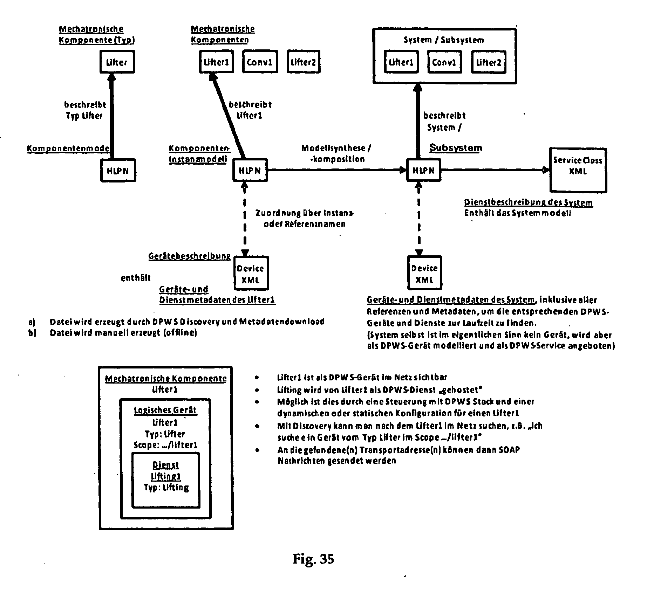

- Fig. 35: schematische Übersicht erfindungswesentlicher Zusammenhänge.

Nachstehend wird ein Konzept eines Anwendungsszenarios beschrieben.

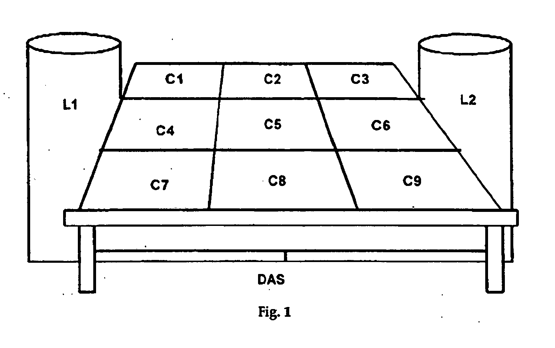

Fig. 1 zeigt ein Fertigungssystem DAS (Dynamic Assembly System) zur Darstellung der Anwendung des SoA-Ansatzes basierend auf Instanzen einer unidirektionalen Fördereinheit C1-C3, C5, C6-C9, einer Querfördereinheit C4, C6 und einer Liftereinheit L1, L2.

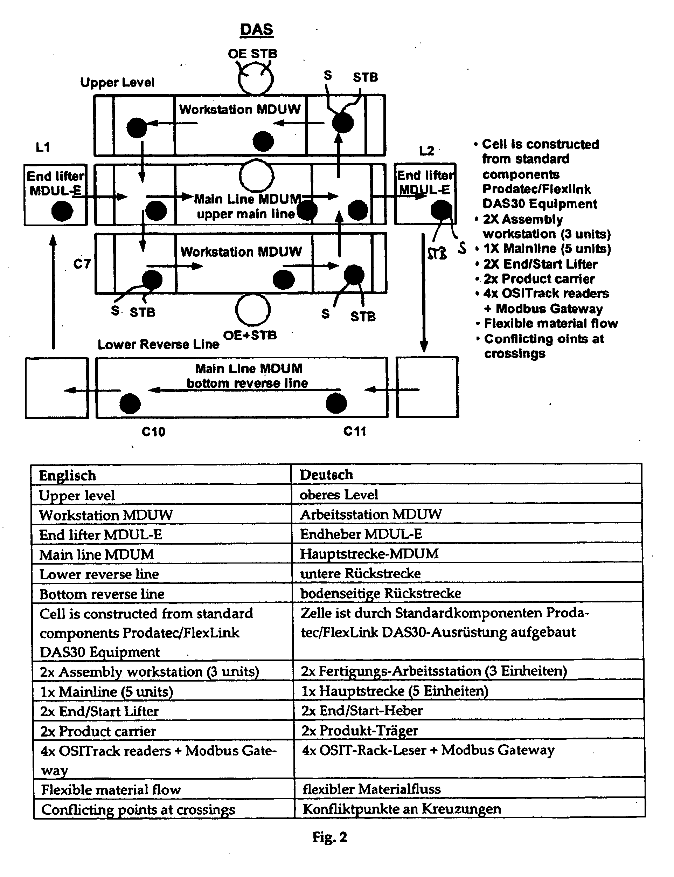

Fig. 2. zeigt dasselbe System jedoch in einem mechatronischen Modulschema und die Verbindung von Automatisierungs- bzw. Steuerungsgeräten STB mit eingebetteten WSbasierten Funktionalitäten, wie Elementar-Services S und orchestrierten Funktionen OS sowie die Platzierung von Orchestrierungs-Maschinen, im Folgenden Orchestrations-Engines OE. Das Fördersystem des dynamischen Fertigungssystems DAS kombiniert flussorientierte Produktionssteuerung und modulare Automation mit ergonomischen manuellen Montagelösungen für Flexibilität und Vielseitigkeit.

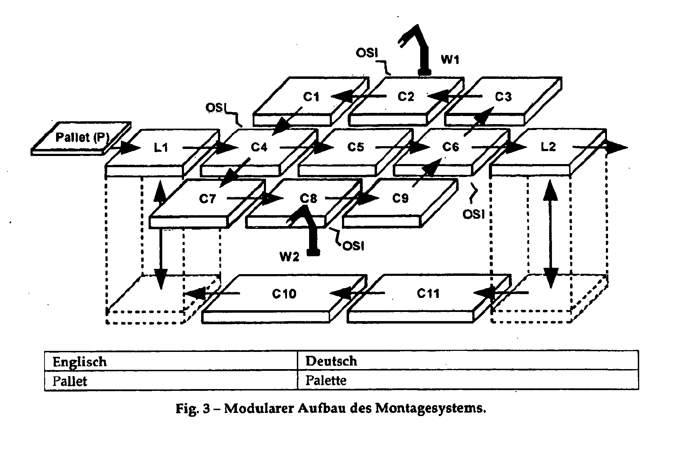

Fig. 3 zeigt einen modularen Aufbau des Systems mit den mechanischen Fördermodulen C1-C11, Liftern L1, L2 und Arbeitsstationen W1, W2.

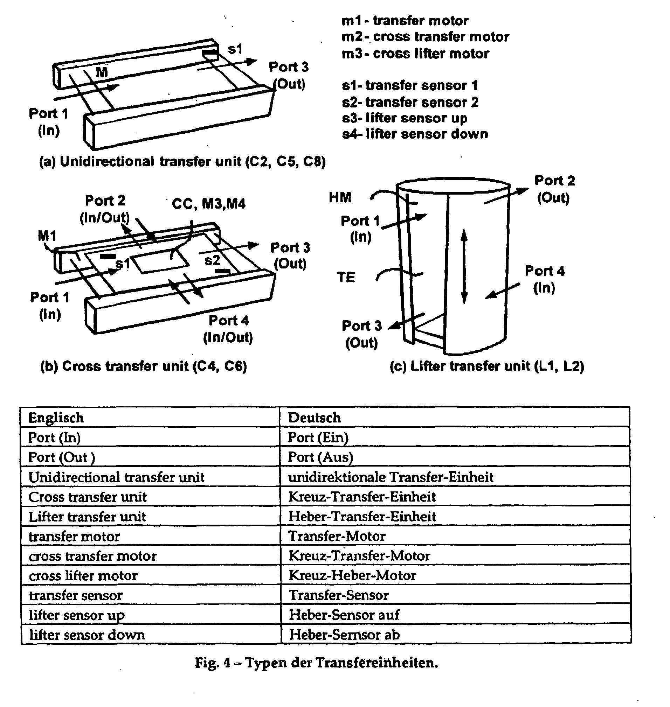

Der zentrale Teil des Transfersystems (Einheiten C1-C9) besteht aus neun Transfereinheiten C1-C9 (Förderern, unidirektional bzw. querfördernd), wie in den Fig. 4 (a) und (b) dargestellt. Die unidirektionale Transfereinheit C9⁻ verfügt über einen Eingangs- und einen Ausgangsport PORT1, PORT3, die Querfördereinheit C4, C6 ermöglicht den Transfer nicht nur in Längsrichtung, sondern auch in senkrecht dazu stehender Richtung und umfasst die Ein- und Ausgangsports PORT1-PORT4. Diese Einheiten weisen einen optischen Sensor S1 und einen Ausgang für einen Fördermotor M auf. Außerdem kann eine Querfördereinheit C4, C6 als eine Kombination aus zwei Geräten angesehen werden, zum einen eine unidirektionale Transfereinheit C2, C5, C8 und einen Lifter L1, L2 mit der Möglichkeit, direktionale Transfers auszuführen.

Die Querfördereinheiten C4, C6 weisen zwei optische Sensoren S1, S2 auf, um das Vorhandensein einer Palette P zu erfassen und zwei weitere Sensoren S3, S4, um zu detektieren, ob sich eine Querverbindung CC in der oberen oder unteren Stellung befindet. Die vier Ausgänge werden zur Steuerung von Motoren M verwendet. - einer für den normalen Fördermotor M1, ein anderer Motor M2, um das zentrale, direktionale Querverbindungsmodul zu heben und zwei Motoren M3, M4 für den direktionalen Transfer im Uhrzeigersinn und im entgegengesetzten Uhrzeigersinn.

Die unteren Transfereinheiten C10, C11 verfügen über dasselbe Verhalten wie die normalen unidirektionalen Transfereinheiten, wie z. B. die Einheit C5, sind jedoch länger.

Lifter werden durch die Einheiten L1 und L2 identifiziert, wie in Fig. 3 und Fig. 4(c) dargestellt. Neben ihrer Funktion als Schnittstelle zwischen dem oberen und dem unteren Teil des Systems sind sie außerdem für den Transfer von Paletten P in und aus einer Fabrikationszelle verantwortlich. Eine Transfereinheit TE im Lifter L1, L2 verfügt zur Erfassung des Vorhandenseins einer Palette P über zwei optische Sensoren S1, S2. An beiden Enden der Einheiten befinden sich Lichtschranken. Die Transfereinheit TE kann des Weiteren in zwei Richtungen bewegt werden (analog zur zentralen Einheit CC der Querfördereinheit C4, C6), es liegt also ein Ausgang PORT1-PORT4 für jede Richtung vor. Ein Liftermotor HM wird durch eine Telemecanique (eingetragene Marke) Altivar 71 in Kombination mit einer ControllerInside-Card gesteuert (Frequenzumrichter für Hubsteuerung), der die aktuelle Position des Förderers zählt und berechnet. Die ControllerInside-Card wurde statt des Advantys (eingetragene Marke) EHC3020-Schnellzählemoduls ausgewählt, da zum Zeitpunkt der Auswahl die erforderliche Präzision für die Hubposition (< 1mm) nicht gewährleistet war.

In der folgenden Tabelle werden die Charakteristika der einzelnen Bestandteile der Transfereinheiten im System zusammengefasst.

| **Einheits-ID** | **Typ und Funktionen** | **Palette IN-Port** | **Palette OUT-Port** |
|---|---|---|---|
| C1,C3,C7,C9 | quer | 3 verfügbar, nur einer verwendet⁽¹⁾ | 3 verfügbar, nur einer verwendet⁽¹⁾ |
| C2,C8 | unidirektional, Benutzerpaneel Arbeitsplatz, RFID⁽²⁾ | 1 | 1 |
| C4,C6 | quer, RFID⁽²⁾ | 3 verfügbar, nur zwei verwendet⁽¹⁾ | 3 verfügbar, nur zwei verwendet⁽¹⁾ |
| C5 | unidirektional | 1 | 1 |
| C10,C11 | unidirektional (lang) | 1 | 1 |
| L1,L2 | Start- und EndHfter⁽³⁾ | 2 verfügbar, nur einer verwendet⁽¹⁾ | 2 verfügbar, nur einer verwendet⁽¹⁾ |

| | | | |
|---|---|---|---|
| (1) Durch die physikalische Kombination der Einheiten sind nur einige der Ein- und Ausgangsports der Paletten verfügbar (Eingang mit Ausgang verbunden) bzw. nach Vernunftprinzip zu aktivieren (Dead-end). (2) RFID: Radio-Frequency IDentification. (3) Der Start-Lifter wird für die Verwendung von RFID vorbereitet. | | | |

Die Paletten P werden manuell mit Hilfe der Einheiten C2 und C8 in das System platziert und auf alternativen Pfaden zu den Arbeitsstationen W1 und W2 befördert. In dieser sehr kleinen Zelle zirkuliert eine Palette P solange im System, bis sie zu einer der Arbeitsstationen geleitet wird. Die Wegbestimmung erfolgt an den Quereinheiten abhängig von den Produktionsvorgängen, die das auf eine bestimmte Palette gesetzte Produkt benötigt, und hängt ebenso vom Standort und der Verfügbarkeit der Produktionsservices im System (hier bei W1 und W2) ab. Eine Arbeitsstation kann mehr als eine Produktionsbetriebsart bieten und eine Produktionsbetriebsart kann von mehr als einer Arbeitsstation aus möglich sein.

Sobald eine Palette P zu einer gegebenen Arbeitsstation W1, W2 geleitet wird, um einen bestimmten Produktionsvorgang zu empfangen, hält das Liniensteuerungssystem (im vorliegenden Fall eine Service-Orchestrierung) die Palette P an der Transfereinheit C2, C8 an, bis der Produktionsvorgang durch den Bediener ausgelöst wird. Das Signal des Bedieners wird durch eine einfache HMI-Anwendung (Human-Machine-Interface, Mensch-Maschine-Schnittstelle) übertragen.

Zur Identifikation der Paletten P werden die Quereinheiten C4, C6 und die Arbeitsstation-Einheiten C2, C8 mit einer Identifikationseinheit IE wie RFID-Gerät (Radio-Frequency IDentification = Funkfrequenz-Identifikation) ausgestattet, die die Fähigkeit aufweisen, Daten von/auf Etiketten der Paletten P zu lesen/zu schreiben. Die Identifikationseinheit IE wird von der Linienorchestrierung eingesetzt, um ein externes Produktions-Ausführungs-System PES (Production Execution System) nach dem nächsten vorgesehenen Produktionsschritt zu "fragen". Alternativ kann diese Abfrage nicht an jeder Querverbindung erfolgen, sondern der Produktionsablauf kann auf dem Produktionsetikett gespeichert und von ihm abgelesen werden.

Nachfolgend wird der Automations- und Steuerungsaufbau erläutert.

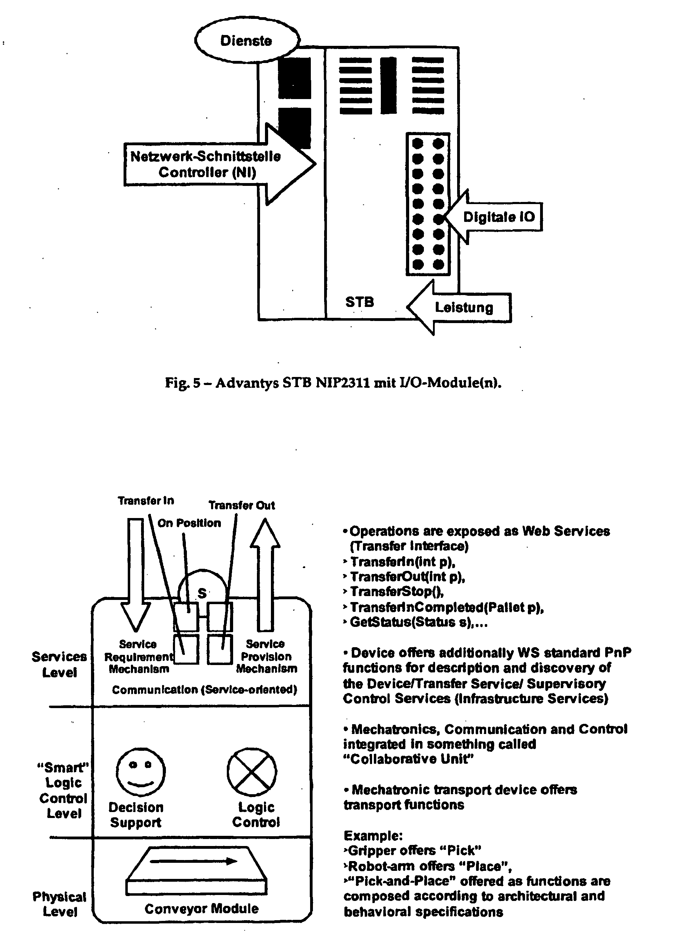

Zahlreiche Automatisierungsgeräte STB werden zur Steuerung der mechanischen Teile des Fertigungssystems verwendet und bilden die Schnittstelle zu einem Produktions-Ausführungs-System PES einer höheren Ebene durch Anbieten und Nutzen von Services.
- Advantys STB: Jedes der Systemmodule bzw. der Komponente C1-C11, L1-L2, W1, W2 wird individuell von einem Automatisierungsgerät STB wie Telemecanique (eingetragene Marke) Advantys STB NIP2311 gesteuert, welche schematisch in Fig. 5 dargestellt ist. Das Automatisierungsgerät STB verfügt über ein Ethernet-Netzwerk-Schnittstellenmodul NIM und kann vom Benutzer je nach Prozessanforderungen aus verschiedenen Eingangs-/ Ausgangsmodulen IO zusammengestellt werden.
- Advantys STB + IEC Engine: Für die Implementierung einer IEC-Engine IECE in ein Automatisierungsgerät STB_IECE wird die CPU des Ethernet-Moduls NIM als Host einer SOCRADES-Serviceinfrastruktur verwendet, was den Einsatz benutzerdefinierter Anwendungen als DPWS (Device Profile for Web Services)-kompatible Servicekomponenten ermöglicht. Digitale I/O-Module IO und das Schnellzählermodul werden unterstützt. Das Ethernet-Modul NIM ermöglicht einfache logische Betriebsarten zwischen I/O-Punkten und bildet das Prozessbild in Modbus-Registern ab, In der Fig. 4 ist eine Insel mit digitalen 6-Bit-Eingangs- und Ausgangsmodulen dargestellt. Das Automatisierungsgerät STB_IECE wird für die Implementierung verschiedener Einheiten als mechatronische Komponenten benutzt, was bedeutet, dass jede Einheit von ihrem eigenen Automatisierungsgerät STB_IECE gesteuert wird und ihre Funktionen als Webservice angeboten werden. Diese Services werden von dem Automatisierungsgerät STB_IECE mit einer eingebetteten IEC-Engine IECE implementiert. Eine Software wie ControlBuild der Firma Geensys wird verwendet, um die Logik und die Services offline zu bestimmen und anschließend an die Automatisierungsgeräte STB_IECE zu übertragen. Derzeit werden die Sprachen Function Block Diagram, Ladder und Sequential Functional Chart unterstützt.
- Advantys STB + Petri Net Engine: Ein weiteres Automatisierungsgerät STB_PNE das eine eingebettete Service-Orchestrierungs-Engine OE auf Grundlage einer Petri-Netz-Maschine PNE bietet, wurde ebenso implementiert wie der DPWS-Stack mit denselben Einsatzmechanismen wie für das Automatisierungsgerät STB_IECE mit IEC-Engine. Bei der derzeitigen Art der Implementierung des IEC und der Petri-Netz-Maschine PNE ist die Integration in dasselbe physikalische Gerät nicht möglich. Die Anzahl an OS-Ressourcen (Tasks und Semaphoren) für beide zusammen ist zu hoch und benötigt grundlegende Optimierungen. Des Weiteren kann die Petri-Netz-Maschine PNE noch nicht mit den I/O und/oder dem Meldungs-Subsystem der IEC-Engine per Schnittstelle kombiniert werden. Eine Software wie Continuum Development Studio CDS wird für die Erstellung von Systemmodellen und zur Anwendung dieser Modelle mit dem/den Automatisierungsgeräten STB eingesetzt.
- OSITrack (Markenname) RFID: Für den RFID-Lese-/Schreibzugriff wird ein Identifikationssystem OSI wie OSITrack (Markenname) RFID-Gerät verwendet. Die OSITrack-Geräte OSI werden mittels Modbus Serial an eine Steuereinheit TSX (RS485 an Ethernet-Konverter) angeschlossen, die über ModbusTCP mit dem Netzwerk N kommuniziert. Antennen des Identifikationssystems OSI werden auf die Module C2, C4, C6 und C8 platziert. Jede Palette P kann daher durch ein 112-KByte-Etikett an der Unterseite identifiziert werden. In dem Fertigungssystem verfügt jede Palette P über eine eigene Etiketten-ID. Die Informationen zum Workflow einer speziellen Palette P werden in einer Datenbank gespeichert. Das Identifikations-System OSI prüft automatisch das Vorhandensein einer Palette P und überträgt die Daten ihres Etiketts an die Steuereinheit TSX. Jedes Mal, wenn ein neues Etikett von der Antenne erfasst wird, werden diese Daten aktualisiert.

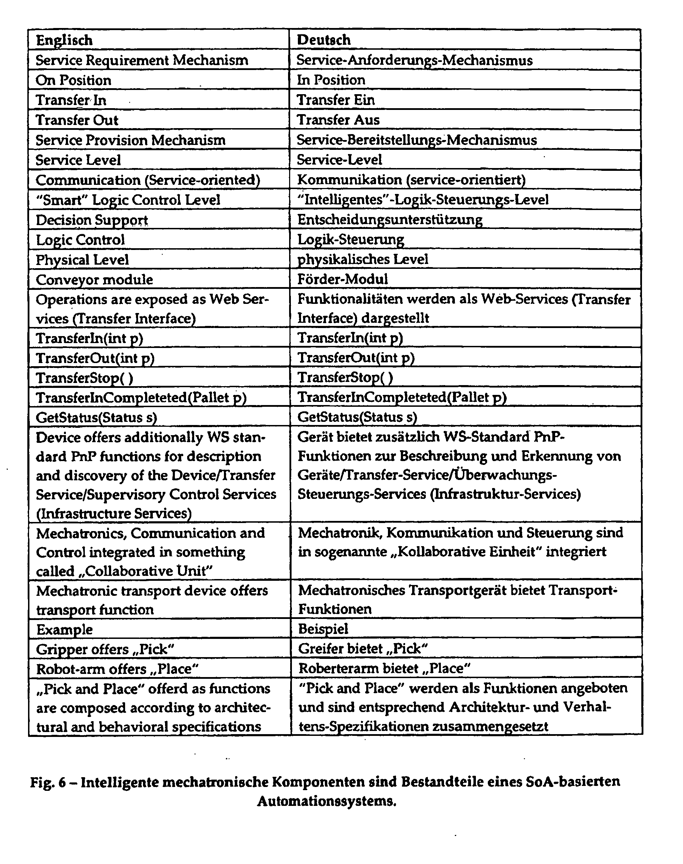

Die Integration der Steuerungsgeräte STB in mechatronische Komponenten/Module des elektromechanischen Baugruppensystems ergibt eine "Kollaborative Automationseinheit" wie in Fig. 6 schematisch dargestellt.

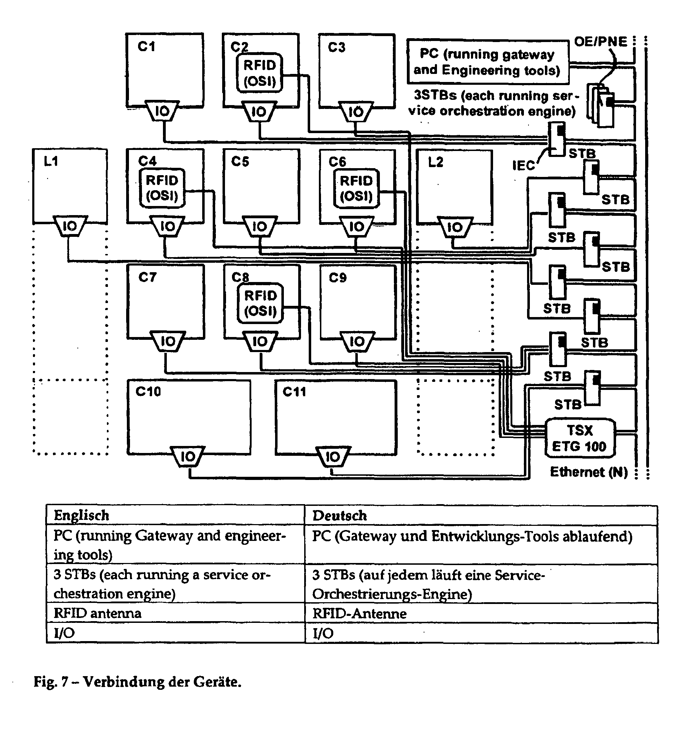

Die folgende Verbindung zwischen Einzelgeräten wird verwendet (siehe Fig. 7):

| **Einheits-ID/Gerät** | **Geräte** | **Firmware/Tools** |
|---|---|---|
| C1-C3, C7-C9 (Linie von Arbeitsstationen) | 2+1 STB | ControlBuild⁽¹⁾ |
| C4-C6 (Hauptlinie) | 3 STBs | ControlBuild ⁽¹⁾ |
| C10, C11 (Rücklauflinie) | 1 STB | ControlBuild⁽¹⁾ |
| L1, L2 (Lifter) | 1 + 1 STB | ControlBuild⁽¹⁾ |
| RFID-Antennen für C2, C4, C6 und C8 | TSX ETG 100 | DPWS-to-ModbusTCP-Gateway⁽²⁾ |
| Kombinierte Services 1, 2 und 3 | 3 STBs | Petri-Netz-Maschine, Continuum Development Tools⁽³⁾ |

| | | |
|---|---|---|
| (1) ControlBuild wird zur Offline-Beschreibung der Logik und der Service verwendet und dann auf die STBs angewendet. (2) PC-basierte DPWS-to-ModbusTCP-Gateway ist eine Software, mit der einige Logiken und Services fest einprogrammiert werden können (z. B. für RFID). (3) Einzel-STB mit eingebetteter Petri-Netz-Maschine werden mittels Continuum Development Tools konfiguriert. | | |

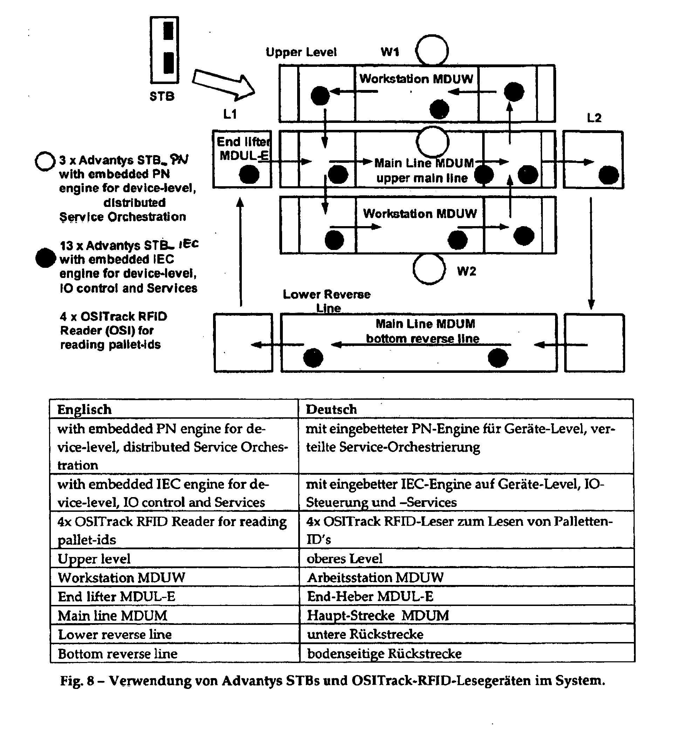

Fig. 8 zeigt die Platzierung der WS-kompatiblen Steuerungsgeräte STB_PNE, STB_IECE.

Jede Arbeitsstation W1, W2 wird mit einem Benutzerpaneel mit zwei Tasten und einem Schalter ausgerüstet. Das Benutzerpaneel wird in dem dargestellten Fertigungssystem nicht verwendet, die eigentliche Verwendung war das Ein- und Ausschalten der Arbeitsstation W1, W2 und die Möglichkeit des Benutzers zwei Befehle zu senden, wie z. B. OK und ERROR. Diese Funktionalität wird von einer PC-basierten HMI ermöglicht, die Produktdaten anzeigt und dem Benutzer die Möglichkeit gibt, die Ergebnisse des Vorgangs einzugeben. Ohne diese Tasten weist der Arbeitsplatz dieselben Eigenschaften wie eine einfache unidirektionale Transfereinheit auf.

Der Ansatz, komplexe, flexible und rekonfigurierbare Produktionssysteme zu erstellen, ist, dass diese Systeme aus modularen, wiederverwendbaren Komponenten zusammengesetzt werden, die ihre Produktionseigenschaften als eine Reihe verschiedener Services anbieten. Dieser Ansatz des Aufbaus gilt für die meisten Ebenen in der Produktion; einfache Geräte fügen sich zu komplexen Geräten oder Maschinen zusammen, die selbst wiederum gebaut werden, um Zellen oder Linien eines Produktionssystems zu erstellen. Dasselbe gilt für die Konzipierung serviceorientierter Produktionssysteme und das Zusammenfügen komplexer Services aus einfacheren Services.

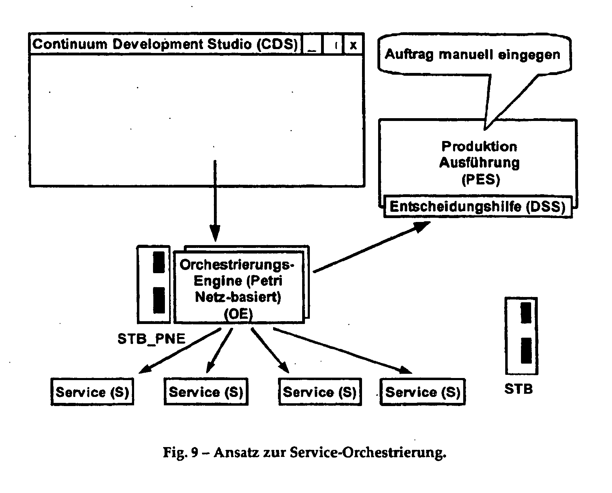

Die modellbasierte Orchestrierungs-Engine OE ist zusammen mit den Orchestrierungs-Tools CDS Bestandteil einer Systemarchitektur, die in Fig. 9 als allgemeine Orchestrierungs-Engine-Box bezeichnet wird. Diese Abbildung gibt des Weiteren einen Überblick über die Beziehungen zu anderen integrierten Komponenten wie z. B. das Entscheidungshilfe-System DSS und das Design und die Stimulierung von serviceorientierten Systemen mit 2D/3D-Engineering-Umgebungen CDS.

Aufgrund der Hardware- und Gesamtprojektanforderungen wurde beschlossen, dass grundlegende Bausteine, die das verteilte System ausmachen, konfigurierbare Softwarekomponenten für verschiedene Aufgaben sein sollten. Deshalb wurden Softwarekomponenten als Bots entworfen, die intern über eine sogenannte "Orchestrierungs-Engine" verfügen und in der Lage sind (in einer serviceorientierten Art), ihre Aktivität zu koordinieren und außerdem Kollaborationsprozesse mit anderen Komponenten im System zu übernehmen.

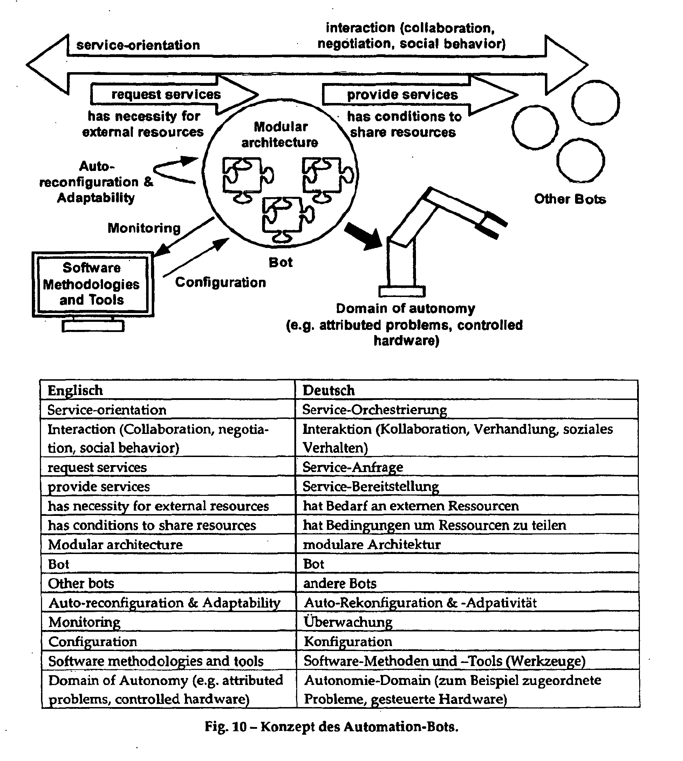

Im Beispiel gemäß Fig. 10 ist der Autonomiebereich des Bots eine Transfereinheit (Förderer). Die Kommunikation mit anderen Softwarekomponenten im System (z. B. anderen Bots) wird über das Angebot von Services und die Nutzung von notwendigen Services anderer Komponenten ausgeführt. Für das Design, die Konfiguration und die Wartung der Bots sind verschiedene Tools erforderlich, die benutzerfreundlich sein müssen und die Entwicklung beschleunigen, indem ein Programmieransatz auf höherer Ebene (visuelle Sprachen) verwendet wird.

Da es sich bei Services nicht um isolierte Entitäten handelt, die direkt verknüpfte Softwarekomponenten verwenden, ist eine Logik vorzusehen, die die Interaktion erzeugt. Die gewählte Modellierungssprache ergibt sich aus Petri-Netz-Spezifikationen mit Erweiterungen auf höherer Ebene wie Zeitbetrachtungen, einem Eigenschaftssystem und einer anpassbaren Token-Engine. Nachstehend wird dies als Petri-Netz der höheren Ebene (High-Level-Petri-Net, HLPN) bezeichnet. Der erweiterbare Eigenschaftsmechanismus des HLPN wird als Schnittstelle für die Konfiguration der mit dem Webservice verbundenen Eigenschaften verwendet.

Weitere Anforderungen sind die Verwendung des Entscheidungshilfesystems (DSS; Decision Support System), das in der Lage ist, dem Petri-Netz-Modell an jedem Entscheidungspunkt korrekte Daten zur Verfügung zu stellen. Dieses DSS ist die wichtigste Schnittstelle zwischen dem modellbasierten Ansatz für das Transportsystem und dem Produktionsplanungssystem.

Weitere Details über verwendete wissenschaftliche Ansätze sind u.a. in folgenden Veröffentlichungen (sämtliche beziehen sich auf das SOCRADES-Projekt) offenbart und auf deren Inhalt vollinhaltlich Bezug genommen wird:
- J. Marco Mendes, Paulo Leitäo, Armando W. Colombo, Francisco Restivo , "Service-oriented control architecture for reconfigurable production systems", Veröffentlichung zur 6. Internationalen Konferenz des IEEE über Industrie-Informatik, pp. 744-749, 2008.
- J. M. Mendes, J. de Sousa, P. Leitäo, A. W. Colombo, F. Restivo , "Event Router-Scheduler for the Modular Anatomy of Service-oriented Automation Components", Veröffentlichung zur 6. Internationalen Konferenz des CIRP zur Intelligenten Systemen im Bereich Manufacturing Engineering, pp. 585-590, 2008.
- J. Marco Mendes, Alexandre Rodrigues, Paulo Leitäo, Armando W. Colombo, Francisco Restivo, "Distributed Control Patterns using Device Profile for Web Services", Veröffentlichung zum 12. Workshop der Internationalen Konferenz der IEEE EDOC, 2008.
- Paulo Leitäo, J. Marco Mendes, Armando W. Colombo, "Decision Support System in a Service-oriented Control Architecture for Industrial Automation", Veröffentlichung zur 13. Internationalen Konferenz des IEEE über sich abzeichnende Technologien und Fabrik-Automation, pp. 1228-1235, 2008.
- J. Marco Mendes, Paulo Leitão, Armando W. Colombo, Francisco Restivo, "High-Level Petri Nets Control Modules for Service-Oriented Devices: A Case Study", Veröffentlichung zur 34. jährlichen Konferenz der IEEE Industrial Electronics Society, pp. 1487-1492, 2008.
- Joäo Pinto, J. Marco Mendes, Paulo Leitäo, Armando W. Colombo, Axel Bepperling, Francisco Restivo, "Decision Support System for Petri Nets Enabled Automation Components", Veröffentlichung zur 7. IEEE Internationale Konferenz über Industrie-Informatik, 2009.
- J. Marco Mendes, Axel Bepperling, Joäo Pinto, Paulo Leitäo, Francisco Restivo, Armando W. Colombo, "Software Methodologies for the Engineering of Service-Oriented Industrial Automation: The Continuum Project", Veröffentlichung zur 33. jährlichen Internationale IEEE-Konferenz über Computersoftware und Applikationen, 2009.
- J. Marco Mendes, Francisco Restivo, Paulo Leitäo, Armando W. Colombo, "Customizable Service-oriented Petri Net Controllers", Angenommen zur 35. jährlichen Konferenz des IEEE-Industrie-Elektronikgesellschaft, 2009.

Da SOA-basierte Automationssysteme nicht über zugehörige Anwendersoftware und Methodologien verfügen, wurden Anstrenaungen im Bereich Softwareentwicklung unternommen und mehrere Softwarepakete für das eingesetzte Fertigungssystem erstellt. In jedem Fall sollen System-Engineering und angeschlossene Tools die Arbeit des Entwicklers erleichtern. Was das Petri-Netz anbelangt, stellt sich durch das Fehlen der Computertools, die eine einfache Nutzung großer und komplexer Netzwerke ermöglichen würden, nur ein begrenzter praktischer Nutzen dar.

Das Projekt wurde nach dem Kontinuum-Konzept, das aus der Physik und der Philosophie bekannt ist, als *Continuum Development Tools* bezeichnet. Die ersten Entwicklungen wurden durch die Integration bereits entwickelter Softwarekomponenten, insbesondere der PndK (Petri Nets Development ToolKit) unter derselben Bezeichnung erreicht. Mit dieser Integrierung wurde der Bedarf zahlreicher Softwarepakete deutlich, u.a.: ein Framework zur Entwicklung von Bots, Engineering-Tools für die Erstellung und die Verwaltung von Bots und zahlreiche weitere Hilfsmittel (hauptsächlich Bibliotheken) zur Unterstützung von Aufgaben wie die Kommunikation und Schnittstelle für Geräte.

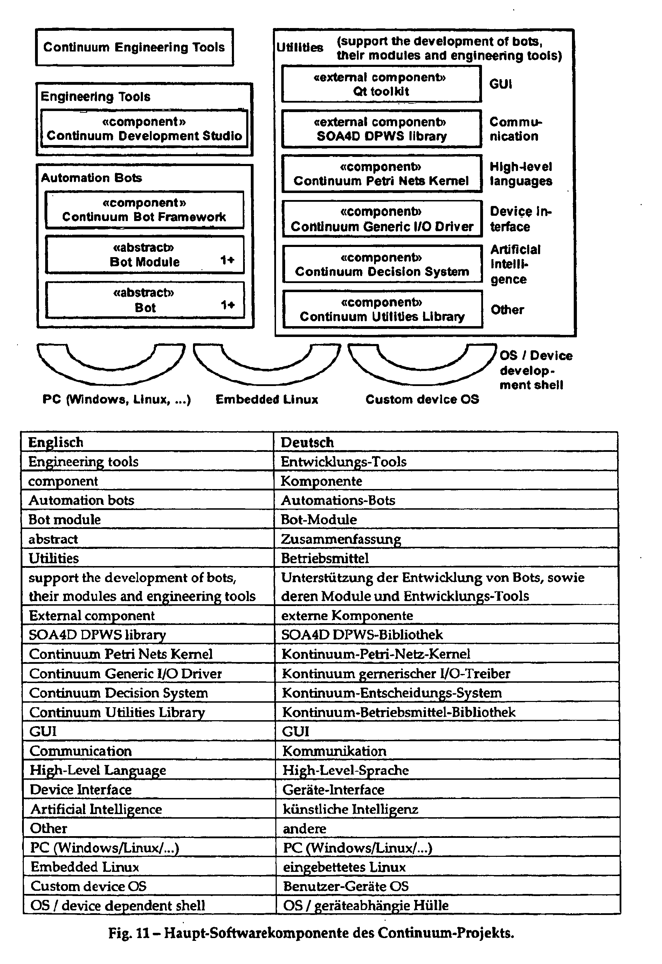

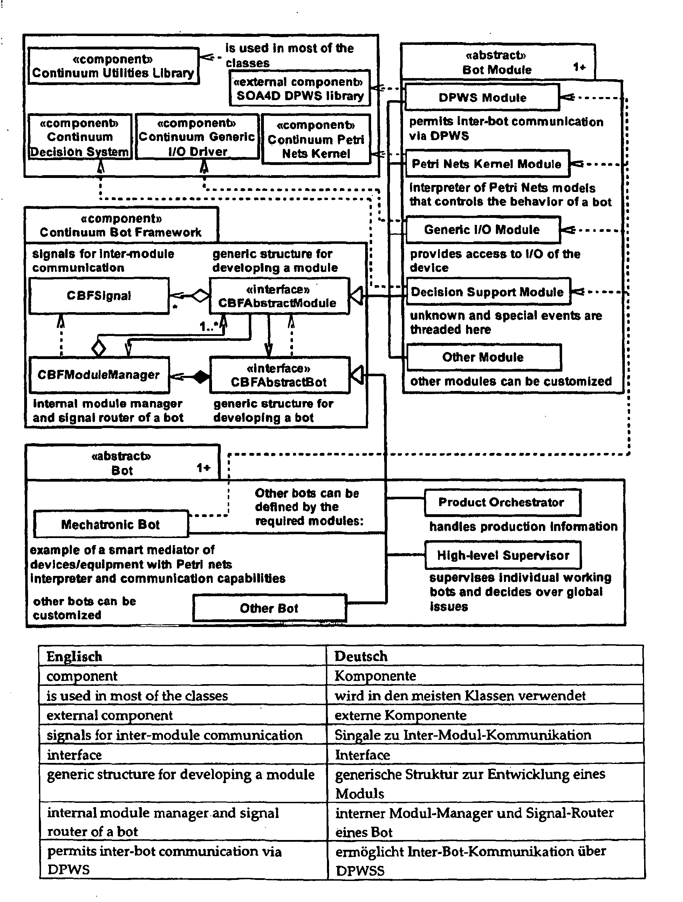

Fig. 11 stellt ein Komponentendiagramm mit zahlreichen gruppierten Softwarekomponenten dar, die für den ursprünglichen Umfang des Continuum-Projekts geplant waren. Zielsysterne reichen von traditionellen PCs (speziell für Engineering-Tools) bis zu Geräten, die den generierten Bot-Code einbetten müssen. Die Gruppen werden nach Automations-Bots, den Engineering-Tools, die sie unterstützen und zusätzlichen Hilfsmitteln (in Form von Bibliotheken) zur Entwicklungsunterstützung kategorisiert. Die Hauptkomponente wäre das Continuum Bot Framework (CBF) zur Entwicklung der Bots und ihrer funktionalen Module, die Ihren Entwicklungsansatz in der Anatomie von Lebewesen finden. Eine weitere Komponente, das auf eine erweiterbare Document/View-Framework basierende Continuum Development Studio (CDS), bietet ein Engineering-Tool für wissenschaftlich orientierte Bots, z. B. den Support visueller Beschreibung, Analyse und Verhaltenssimulation (derzeit in Petri-Netz-Formalismus laut Definition von T. Murata, 1989). In den nächsten Abschnitten werden beide Automations-Bots und Engineering-Tools detaillierter erläutert.

Das Hilfsmittelpaket schließt mehrere wiederverwendete Software-Bibliotheken und - Tools ein. Einige davon wurden intern entwickelt und andere aus externen Quellen hinzugefügt, wie z. B. die SOA4D-DPWS-Bibliothek (verfügbar unter https://forge.soa4d.org) zur Entwicklung von Webservices und das Qt-Toolkit (siehe http://qtsoftware.com), das hauptsächlich als grafisches Toolkit für menschliche Interaktion im CDS verwendet wird.

Die Haupt-Entwicklungssprachen sind C und C++. Die Entwicklungsumgebung wurde mit Hilfe mehrerer Tools generiert und verwaltet. Hierbei wird Subversion (http://subversion.tigris.org) als Versionierungssystem eingesetzt. CMake (http://www.cmake.org) wurde als Building System (erlaubt die plattformübergreifende Entwicklung und Generierung) gewählt. Darüber hinaus wird die Dokumentation mit Hilfe von Doxygen (http://www.doxygen.org/) generiert. Es wird kein spezielles Software-Projektmanagement-Tool verwendet, da die Gruppe nur aus wenigen Personen besteht und die Entwicklung normalerweise an einem Ort erfolgen kann.

Um die notwendigen Anforderungen zu erfüllen, müssen Bots, die für die Implementation mehrerer Funktionen vorgesehen sind, eine konsistente Anatomie für die Funktionstüchtigkeit der verschiedenen Funktionsmodule ("Organe") aufweisen. Asynchron laufende Module, mögliche Dateninkonsistenzen und parallel laufende Prozesse und Threads können Probleme verursachen. Im Allgemeinen ist die Modulintegration in einen vollständig funktionierenden Bot in Betracht zu ziehen. In Analogie zu dem, was sich in fast allen Tieren mit einem Nervensystem vollzieht, müssen von den Modulen erzeugte "Impulse" oder Signale korrekt an den Bestimmungsort geleitet und interpretiert werden. Dies kann als eine lose Form der Integration erachtet werden, insbesondere bei eventbasierter Integration, bei der Module durch Meldungen von und Reagieren auf Ereignisse miteinander interagieren.

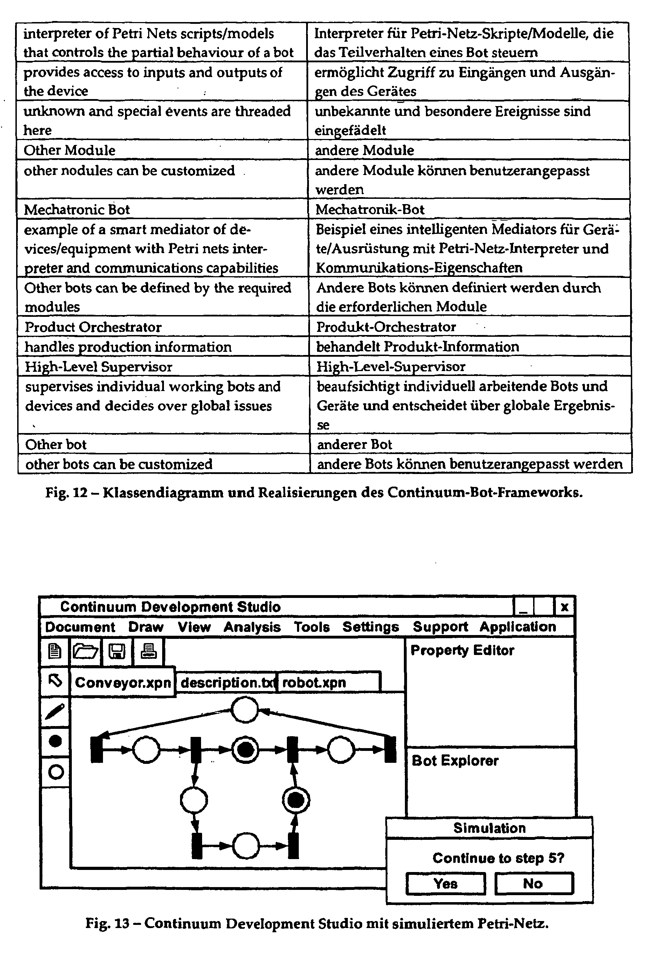

Die Grundlage für die Entwicklung von Bots ist das Continuum-Bot-Framework. Ein Klassendiagramm mit Fokus auf das CBF und Realisierungen der Module und Bots wird in Fig. 12 gezeigt. Ein Modul kann durch Vererbung der CBFAbstractModul-Klasse definiert werden und ihm so spezielle Funktionalitäten hinzugefügt werden. Das Petri-Netz-Kernel-Modul verwendet z. B. die Funktionen und Strukturen der Continuum-Petri-Nets-Kernel-Bibliothek. Für das DPWS-Modul wurde die externe SOA4D-DPWS-Bibliothek verwendet, um ein Kommunikationsmodul zu erzeugen. Dieses kann von Bots zur Kommunikation mit anderen Bots durch Anbieten von eigenen Services oder durch Verwenden der Services der anderen benutzt werden. Ein unabhängiger Bot (integriert als allein laufende Anwendung oder als Bibliothek) kann durch Abwandlung des CBFAbstractBot erreicht werden, indem spezieller Code hinzugefügt und notwendige Module kombiniert werden. In der Fig. 12 ist ein Beispiel eines mechatronischen Bots aufgeführt, der von mehreren Modulen abhängt.

Für die intraspezifische Kommunikation eines Bots werden Signale verwendet, d. h., es besteht eventbasierte Interaktion zwischen den Modulen. Ein Signal wird von der CBFSignal-Klasse erzeugt und mehrere Parameter und Benutzerdaten können mit den Instanzen des Signals definiert werden. Signale werden von einem Modul gesendet und über einen zwischengeschalteten CBFModuleManager, der mit jedem Modul verbunden ist, weitergeleitet. Der Empfang der Signale und ihre Analyse wird asynchron von jedem Modul ausgeführt. Wenn ein Signal empfangen wird, wird es in der lokalen Warteschlange des Moduls gespeichert. Intern stellt ein Modul einen Threadkreislauf dar, der die lokale Warteschlange empfangener Signale analysiert. Wenn ein Signal aus der Warteschlange entnommen wird, löst dies die Ausführung eines diesem Event entsprechenden Programmcodes aus. Der verwendete Signalmechanismus kann hinsichtlich der Funktion mit dem Signal/Slot-Prinzip des Qt-Toolkits verglichen werden.

Die Anwendung von Petri-Netzen kann für typische Systeme mit festgelegtem Verhalten aber auch für komplexere Systeme mit verteilten Teilnehmern sinnvoll sein. In jedem Fall sollen System-Engineering und zugehörige Tools die Arbeit des Entwicklers erleichtern. Was das Petri-Netz anbelangt, stellt sich durch das Fehlen der Computer-Tools, die eine einfache Nutzung großer und komplexer Netzwerke ermöglichen würden, nur ein begrenzter praktischer Nutzen dar. Daher beabsichtigt das Continuum Development Studio (CDS), von der Spezifizierung und Konfigurierung des Automations-Bots, der Analyse und der Simulation bis zur Inbetriebnahme des Systems, eine benutzerfreundliche Umgebung für mehrere Engineering-Aufgaben serviceorientierter Automationssysteme zu bieten. Fig. 13 stellt einen Screenshot des CDS dar, es simuliert ein Petri-Netz-Prüfmodell.

Die Entwicklung basierte auf einem Port und der natürlichen Weiterentwicklung des vorherigen PndK, der zusätzlich mit einem Multi-Document/View-Type-Framework (ähnlich der strukturellen Vorlage des Model-View-Controllers) und weiteren Tools versehen wurde. Das Framework wurde auf unzureichender Basis des verwendeten Qt-Toolkits erstellt (das tatsächlich die Model-View-Programmierung in Klassenform unterstützt, jedoch kein Framework für ihre Verwaltung und ihre Integration in eine Anwendung aufweist). Im Grunde verfügt das Framework über eine Dokumentenmanagerklasse zur Überwachung von Dokumenten und ihre Ansichten, einen Project Explorer, um Dokumente in logischer Art und Weise hinzuzufügen und die abstrakten Klassen, mit denen Entwickler personalisierte Dokumente und Ansichten einrichten kann. Der Dokumentmanager erlaubt die Erstellung von Dokument- und die Ansicht-Instanzen nach Art der Fabrikmethode und bietet ebenso die Personalisierung ihrer Tools, z. B. Menüs, Toolbars und andere Widgets. Die Dateiverwaltung (durch Vorgänge wie Neu, Öffnen, Speichern usw.) wird für alle Dokumenttypen auch auf eine integrierte Art gehandhabt. Derzeit sind nur Petri-Netz- und Text-Dokumenttypen (sowie entsprechende Ansichten) implementiert.

Petri-Netz-Dokument/Ansicht ermöglicht das Design, die Analyse und die unabhängige Simulation von Petri-Netzen. Des Weiteren ist ein personalisiertes Eigenschaftsssystem entwickelt worden, das das Hinzufügen von Petri-Netzen und ihren Elementen mit Informationen vorsieht, die z. B. verwendet werden können, damit ein Petri-Netz-Modell mit dem Verhalten eines Automations-Bots assoziiert werden kann. Ebenso ist es möglich, eine bereits konfigurierte WSDL-Datei zu importieren und sie zu den Transitionen des modellierten Petri-Netzes zuzuordnen, so dass die Transitionen aktiv an den Meldungssequenzen teilnehmen, wenn das Modell in einem Bot verwendet wird. Es liegt eine eingebaute Orchestrierungs-Engine vor, die Services je nach Petri-Netz-definiertem Workflow koordinieren und synchronisieren kann (mittels SOA4D-DPWS-Bibliothek). Die Konfigurierung der Bots (mit Petri-Netz-Kernel-Modul) erfolgt hauptsächlich durch Beschreibung des erwarteten Verhaltens mittels Petri-Netz-Modell, einschließlich der Nutzung von externen Services, dem Anbieten der eigenen Services und durch den Gerätezugang.

Die vorherigen Abschnitte führen aus, wie ein Petri-Netz-Designer Modelle für mechatronische Komponenten oder sogar größere Systeme spezifizieren kann.

Gemäß eines ersten Erfindungsgedankens bezieht sich die Erfindung auf ein Verfahren und Softwareprodukt zur Konfiguration von HLPN in SOA-Basierten Automatisierungsgeräten.

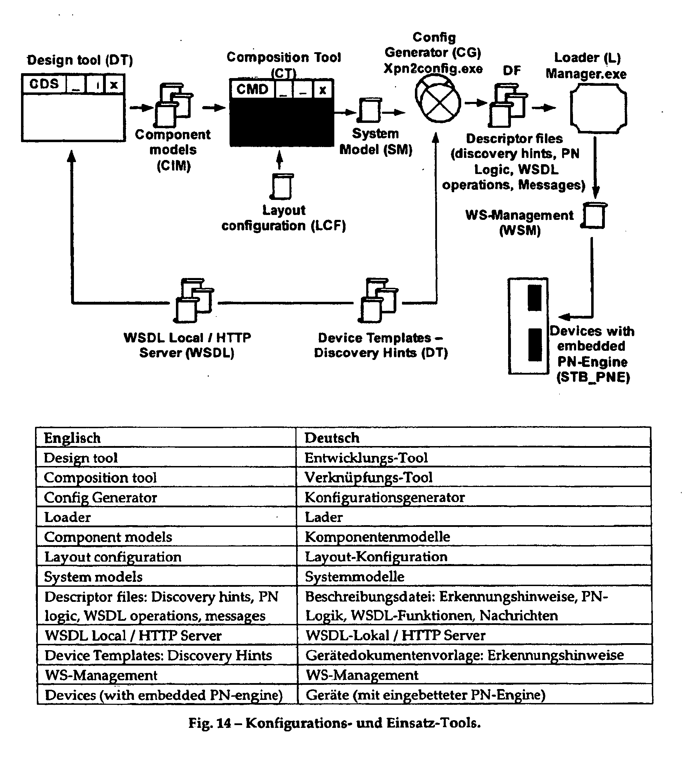

Im folgenden Abschnitt wird eine Toolkette zur Zusammenstellung von Systemen SYS, die Erstellung von Konfigurationsdateien DF (Discripter Files) und die Anwendung dieser Dateien auf Geräte STB oder Simulatoren SIM erklärt. In Fig. 14 wird die vollständige Abfolge des Komponenten- oder Systemdesign, der Zusammenstellung und der Verwendung der Geräte STB aufgezeigt.

Wie bereits zuvor erläutert, kann ein System SYS eine Vielzahl mechatronischer Komponenten C1-C11, L1, L2, W1, W2 umfassen, die als eine Einheit aus Mechanik, Elektronik, Steuerung und einer Schnittstelle wie beispielsweise Kommunikation mittels Web-Services ausgebildet sind. Beispiele für mechatronische Komponenten sind die Lifter L1, L2 sowie die Transfereinheiten C1-C11 mit jeweils zugehörigem Automatisierungsgerät STB.

Unter Berücksichtigung von WSDL-Dateien und Device Templates DT werden aus den Komponenten-Modellen sogenannte Komponenten-Instanzmodelle CIM gebildet, die einen Instanz- und Referenz-Namen aufweisen. Das Komponenten-Instanzmodell CIM beschreibt eine bestimmte mechatronische Komponente wie Lifter L1, L2 in dem System SYS, zum Beispiel den Lifter L1 eines örtlich lokalen Systems.

Unter Komponentenmodell wird ein HLPN-Modell einer mechatronischen Komponente ohne Instanz- und Referenznamen verstanden. Ein Komponentenmodell CM beschreibt alle Komponenten eines Typs, zum Beispiel Lifter L1, L2.

### Weitere wichtigste Hilfsmittel sind:

- Kompositions-Tool CT - hiermit werden Komponenten-Modelle CIM nach einer Layout-Konfigurationsdatei LCT zusammengefügt, die Logikports PORT1, PORT2, PORT3, PORT4 von Komponenten-Instanzmodellen miteinander verbindet.
- Konfigurations-Generator CG - erstellt Einsatzdateien bzw. Konfigurationsdateien DF aus Petri-Netz-Systemmodellen SM, Referenzen, WSDLs und Gerätebeschreibungsdateien.
- Einsatzmanager WSM - lädt die erzeugten Einsatzdateien bzw. Konfigurationsdateien DF in das Zielgerät STB mittels eines WS-Management-Einsatzservices. Das Zielgerät STB muss eine Petri-Netz-Orchestrierungs-Engine OE hosten und durch seine UUID identifiziert werden.

### Weitere Tools:

- WSDL-Parser - erlaubt dem Benutzer die Meldungsstrukturen einer WSDL-Datei im Detail zu prüfen. Er ist erforderlich, wenn WSDL-Vorgänge in Transitionen abgebildet werden und weitere Meldungsparameter zu den Transitionseigenschaften hinzugefügt werden.
- Vorlagengenerator von Gerätebeschreibungsdateien - erstellt eine neue Gerätebeschreibungsdatei aus vorgegebenen Referenznamen. Der Referenzname wird zur Erstellung der Gerätemodelldaten, der Gerätetypen und dem Geräteanwendungsbereich verwendet.
- Geräte-Suchtool - Hilfstool, das alle DPWS-Geräte im Netzwerk erfasst und Gerätebeschreibungsdateien lokal schreibt, damit diese später vom Designer und dem Konfigurations-Generator-Tool CG verwendet werden können. Die Dateien sollten umbenannt werden, da sie den Beschreibungsnamen und die UUID des Geräts zeigen.
- Apache HTTP-Server - sollte zur Speicherung von WSDL- und Schema-Dateien verwendet werden.
- Materna Service Explorer - Hilfstool zur Unterstützung während der Testphase.

### Voraussetzung:

- Korrekte Konfiguration durch Designer: Toolpfade eingestellt; lokales Verzeichnis des WSDL eingestellt; WSDL Basis-URL eingestellt.
- Gerätebeschreibungsdateien verfügbar: Für alle verbundenden Komponenten, die physikalisch vorhanden sind (Geräte-Suchtool verwenden); für alle neu zusammengefügten Komponenten (Vorlagengenerator-Tool verwenden).
- HTTP-Server: läuft; sämtliche WSDL- und Schemadateien werden am korrekten Speicherort gespeichert.

### Vorbereitungen im Detail:

Das Kompositions-Tool CT wird für die semiautomatische Komposition eines Systemmodells SM aus einem Satz Komponenten-Instanzmodell CIM verwendet. Die Komposition verläuft nach einer Layoutkonfigurationsdatei LCF (XML-basierte xrc-Dateien), die die Beziehungen der anzuschließenden Komponenten-Instanzmodelle CIM beschreibt. Die Datei wird mithilfe eines Texteditors erstellt oder mittels externen Tools wie z. B. Delmia. Des Weiteren muss der Benutzer ein einzelnes Modell CIM für jede physikalische Komponente C1-C11, L1, L2 (Kopieren und Einfügen) erstellen, auch wenn die gleichen Modelle CIM verwendet werden. Jedes Komponenten-Instanzmodell CIM muss dann mit einem korrekten und verbindlichen Referenznamen konfiguriert werden. Dies muss entweder vom Designer oder durch Ersetzen von Zeichenketten im Texteditor vorgenommen werden.

Für die Erstellung der Konfigurationsdateien CF werden Gerätebeschreibungsdateien DDF benötigt, die einen 1:1-Link zwischen den verbindlichen Referenznamen in den Modellen CIM und den reellen DPWS-Geräten/-Services herstellen. Der Benutzer kann einen Netzwerkscanvorgang zur Erfassung sämtlicher DPWS-Geräte starten, welcher lokal Gerätebeschreibungsdateien mit Gerätetyp, Betriebsverwendung, Adresse, Beschreibungsname usw. schreibt. Anschließend erzeugt der Benutzer die Verbindung zum verbindlichen Namen durch Umbenennen der jeweiligen Gerätebeschreibungsdatei.

Unter DPWS-Gerät wird ein logisches Gerät (als Servic-Eendpunkt im Netz sichtbar) bezeichnet, welche bestimmte Services für Discovery und Metadatenzugriffe anbietet. Ein DPWS-Gerät ist ein Container für die eigentlichen funktionalen Services (DPWS-Services).

DPWS ist ein Standard, welcher ein eigenes Ressourcenmodell mit DPWS-Geräten und -Services definiert. Der DPWS-Standard fordert, dass ein DPWS-Gerät als Serviceendpunkt im Netz verfügbar ist und die Services WS-Discovery und WS-Metadataexchange anbieten. So können die DPWS-Services vom Gerät abgefragt und adressiert werden. Zum Beispiel ist der Lifter L1 ein DPWS-Gerät vom Typ Lifter, welcher die DPWS-Services wie "lifting" und "transfer" anbietet.

Ein DPWS-Service ist ein DPWS-Conformer dedizierter Service, zum Beispiel vom Typ "lifting" oder "transfer". Außerdem werden noch WS-Metadataexchange und gegebenenfalls WS-Eventing vom DPWS-Standard gefordert und unterstützt.

Metadaten eines eingesetzten Services bezeichnen Zusatzinformationen eines Services (Endpunkte), welche vom Gerät über DPWS-Services heruntergeladen werden können.

Ein Systemmodell SM, das zum Einsatz kommen soll, wird als DPWS-Gerät dargestellt. Daher wird auch hierfür eine Gerätebeschreibungsdatei benötigt. Die Erstellung einer neuen Beschreibungsdatei wird von der Vorlagengenerator-Batchdatei erzeugt, sie benötigt dazu einen verbindlichen Namen als Eingang. Der verbindliche Name muss dem Projektnamen des Modells entsprechen (Name der xpn-Datei).

Ein HTTP-Webserver wird verwendet, um auf alle Dateien über URL zugreifen zu können, so dass jedes Tool eines jeden Rechners, der die Metadaten des eingesetzten Services lesen kann, auch die WSDL-Speicherorteigenschaften interpretieren und so den WSDL ohne Benutzereingreifen herunterladen kann. Der Materna Explorer kann z. B. Clients automatisch herunterladen und erstellen. Ein weiterer Vorteil ist, dass diese Dateien so zentral verwaltet werden können.

Die derzeitige Implementierung des allgemeinen Kommunikationsmoduls, welches von nachbearbeiteten WSDL-Dateien konfiguriert wird, verursacht gewisse Einschränkungen auf die WSDL-Dateien. Nur DPWS-konforme Definitionen können verwendet werden, was bedeutet, dass nur Operationen mit SOAP-HTTP-Anbindung und Document-Style und Literal Encoding verwendet werden dürfen. Nachrichten können entweder leer sein oder nur einen Nachrichtenteil umfassen. Der Nachrichtenteil muss sich auf ein XML-Element und darf sich nicht auf einen Typ beziehen. Die Typen sind in derselben WSDL-Datei zu spezifizieren. Xsd:sequence kann verwendet werden, alle Spezifikationen für Vorkommnisse müssen jedoch eine feste Größe aufweisen; 'unbounded' darf nicht verwendet werden. Xsd:choice, Xsd:union, xsd:any dürfen nicht verwendet werden. Alle Basistypen werden als String behandelt, eine Typprüfung wird nicht ausgeführt. Restriktionen und Facetten wie Aufzählungen (Xsd:enumeration) können verwendet werden, jedoch erfolgt auch hier keine Typprüfung. SOAP-Codierung und Arraytypen werden nicht unterstützt.

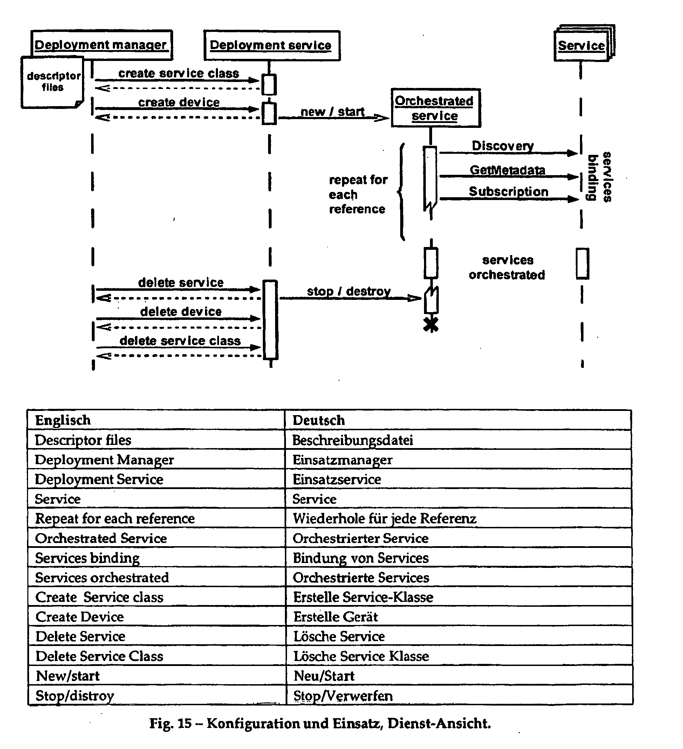

Folgende Schritte sind einzeln auszuführen, und stellen Sie sicher, dass alle Vorbereitungen getroffen wurden (Fig. 15):
- Design von Komponentenmodellen CM, eine pro Geräte- bzw. Komponenten-Typ wie Lifter L1, L2, Transfereinheit C1-C9
- Die Erstellung des Komponenten-Instanzmodells CIM erfolgt durch Kopieren des Komponentenmodells CM und Anpassen des Referenznamens ('bref'-Eigenschaft) entsprechend des Gerätebeschreibungsdateinamens, der mit der Geräteinstanz assoziiert wird
- Erstellung der Layout-Konfigurationsdateien LCF im Texteditor
- Komposition der Komponenten-Instanzmodelle CIM zu einem oder mehreren Systemmodellen SM
- Öffnen der zusammengefügten Systemmodelle SM im Designer. Alternativ kann das Öffnen des Modells SM in einem Texteditor und das Setzen von Koordinaten des PN-Elements auf feste Werte erfolgen
- Konfigurationsdateien DF generieren. Dieser Prozess generiert normalerweise zwei Dateien: einen Serviceklassen-Deskriptor SCD mit den referenzierten Porttypen und einer Modelldarstellung sowie Daten zur gehosteten Serviceinformation mit allen später benötigten Discovery-Hints für die Ausführungs-Engine, um die referenzierten Komponentenservices zu lösen. Fehlende WSDL- oder Gerätebeschreibungsdateien werden dem Benutzer angezeigt
- Sicherstellen, dass ein Automatisierungsgerät STB_PNE oder ein Simulator, das oder der eine Petri-Netz-Maschine PNE, OE hostet, laufen und zum Empfang der Konfiguration bereit sind. Identifizierung der Geräte-UUID des logischen Geräts, das den Ausführungs-Service hostet (verwenden Sie z. B. Materna (Markenname) Explorer)
- Aufrufen des Ausführungs-Managers, um die Beschreibungsdateien für ein spezifisches Systemmodell SM auf ein Zielgerät STB_PNE zu laden (UUID zur Identifizierung des Ziels). Wiederholen dieses Schritts, bis alle Modelle eingesetzt sind
- Sobald das Ziel STB_PNE die Konfigurationsdaten empfangen hat, startet die Ausführung automatisch

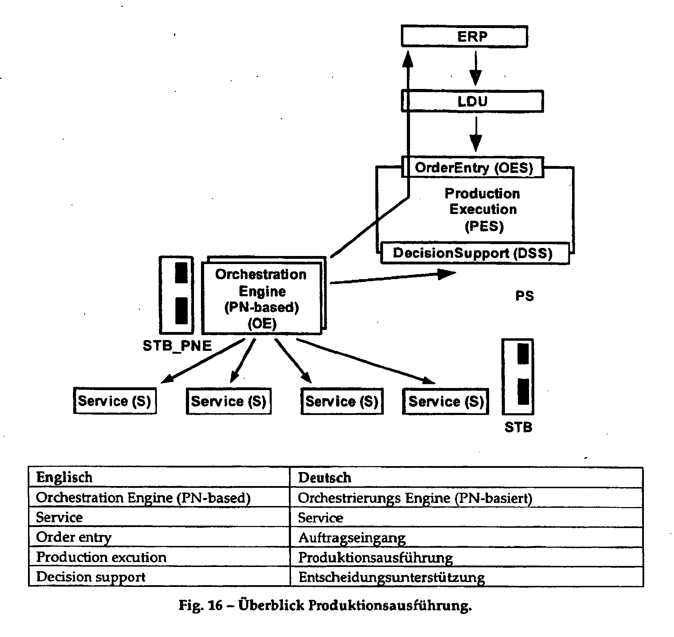

Das Ziel des beschriebenen Verfahrens ist das Aufzeigen des Gewinns an Flexibilität mittels Verwendung einer serviceorientierten Architektur durch Ausführen eines Produktionsauftrags eines ERP (Enterprice-Resource-Planing = Planung/Einsatz von Unternehmensressourcen)-Systems ERP direkt in der Produktionsstätte PS, wie in Fig. 16 gezeigt. Darüber hinaus sind nur minimale Voraussetzungen an die konkrete Zusammensetzung der Produktionslinie im gesamten System vorhanden. Um jedoch eine verständliche Anwendung bieten zu können, wird ein konkretes Setup ausgewählt. Die detaillierten Produktionsschritte werden in einem Produktionsausführungssystem PES gespeichert.

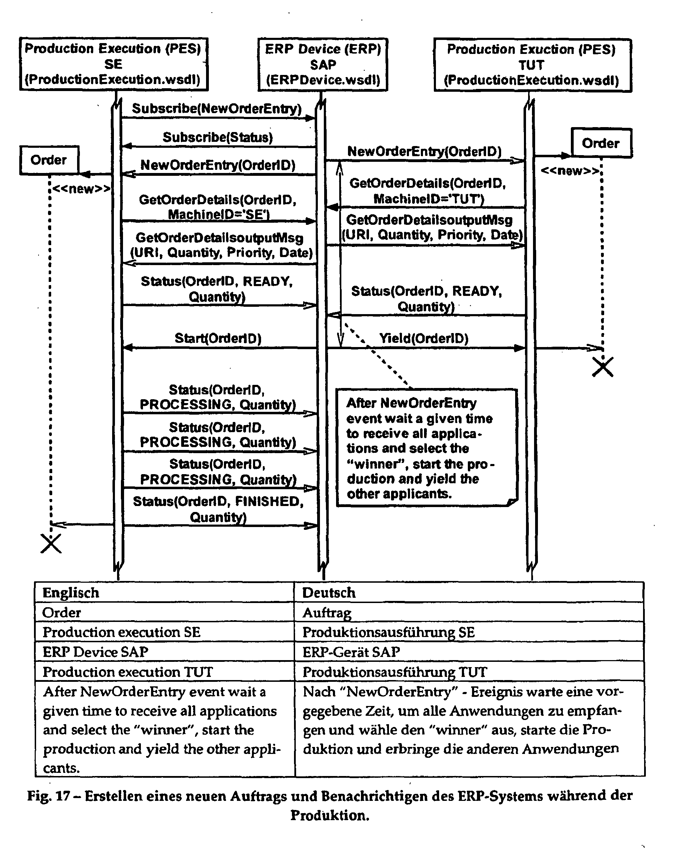

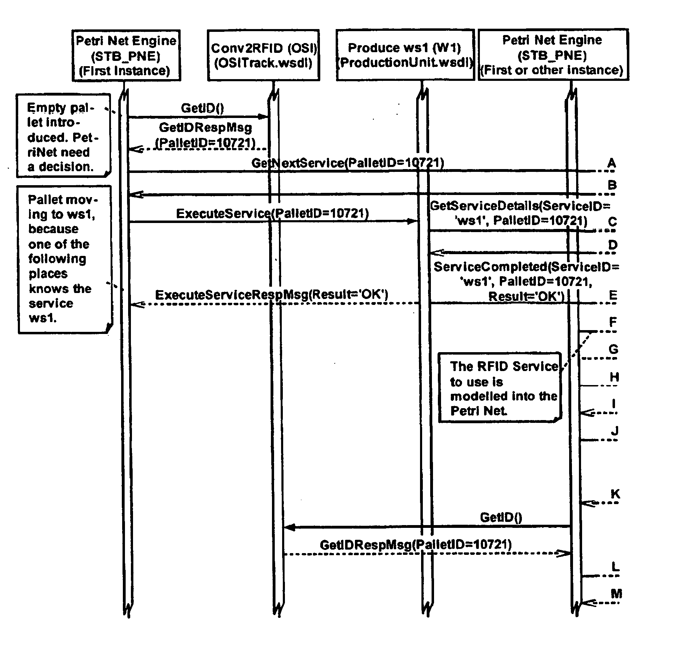

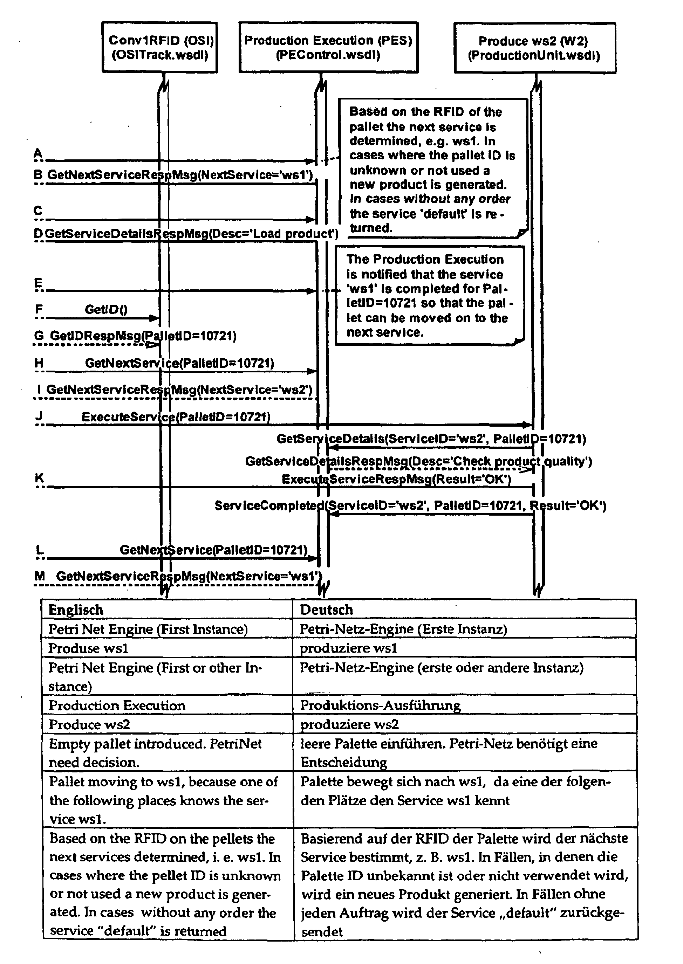

Dieses Produktionsausführungssystem PES ist zwischen dem Petri-Netz-basierten Entscheidungs-Supportmodul DSS, das in Verbindung zu den intelligenten Geräten STB steht, und dem ERP-System ERP (enterprise resource planning) integriert wie in Fig. 16 und 17 dargestellt. Es registriert mittels lokaler Erkennungseinheit LDU (Local Discover Unit) im ERP die NewOrderEntry. Wenn ein NewOrderEntry empfangen wird, werden weitere Details vom ERP-System abgefragt. Zu diesem Zweck wird eine GetOrderDetails-Nachricht verwendet, in der sich das Produktionsausführungssystem PES selbst mit einer Maschinen-ID identifiziert, die die Produktions-Einheit darstellt.

Das Produktionsausführungs-System PES sendet die Statusnachricht READY (BEREIT) mit der Anzahl an produzierbaren Einheiten zurück ans System ERP. Diese Antwort basiert auf intern gespeicherten Daten hinsichtlich benötigter Produktionszeit eines einzelnen Produkts. Die Produktion startet nach Empfang der Start-Nachricht. Die Produktionsausführung wird nach jeder Auftragsstatusänderung an das System ERP gesendet, bis die Anforderung komplett ausgeführt wurde.

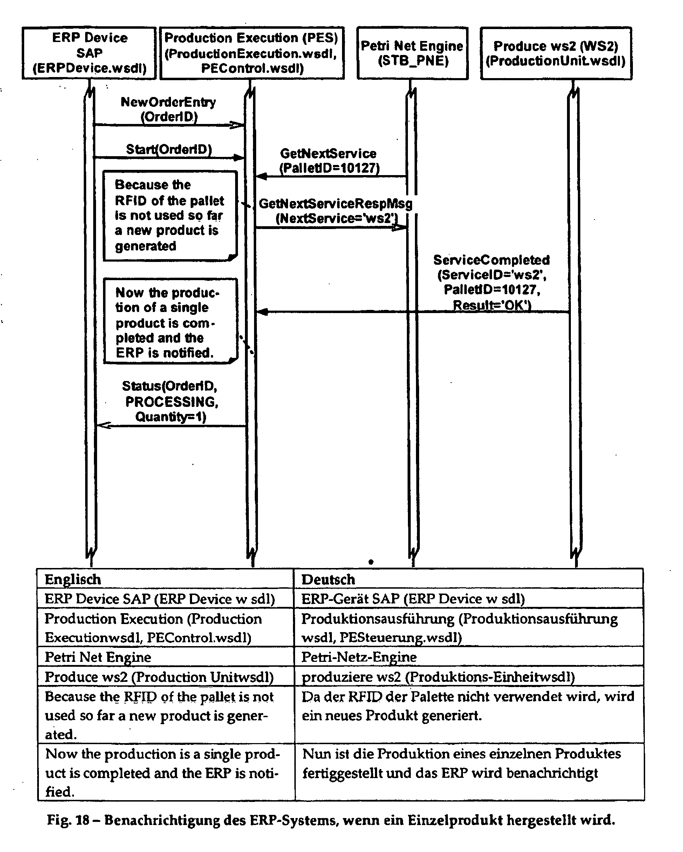

Die Fig. 18 zeigt die notwendige Interaktion bevor eine Statusaktualisierung ausgeführt werden kann. Die Produktionswarteschlange ist zunächst leer. Ein Starten der Produktion mit Hilfe der Start-Nachricht aktiviert den Produktionsprozess. Anschließend generiert die nächste Service-Anfrage für eine leere Palette einen neuen Produkteintrag. Der angefragte Service für den ersten Produktionsschritt wird zur Petri-Netz-Maschine, die den nächsten Service anfordert, zurückgesendet. Dann wird die Palette zur Produktionseinheit bewegt, wo der Produktionsschritt ausgeführt wird. Nach Abschluss dieses Schritts wird dem Produktionsausführungssystem die Beendigung des Services signalisiert.

Ein Produktionsschritt wird beendet, nachdem eine ServiceCompleted-Nachricht vom Produktionsausführungssystem gesendet wurde. Dies führt zum nächsten Schritt des Services. Wenn der letzte Schritt der Produktionsliste ausgeführt wurde, ist das Produkt vollendet. Der Vollendung eines einzelnen Produkts erhöht die Anzahl der hergestellten Produkte um eins und löst eine Statusaktualisierung aus, die zum ERP-System gesendet wird.

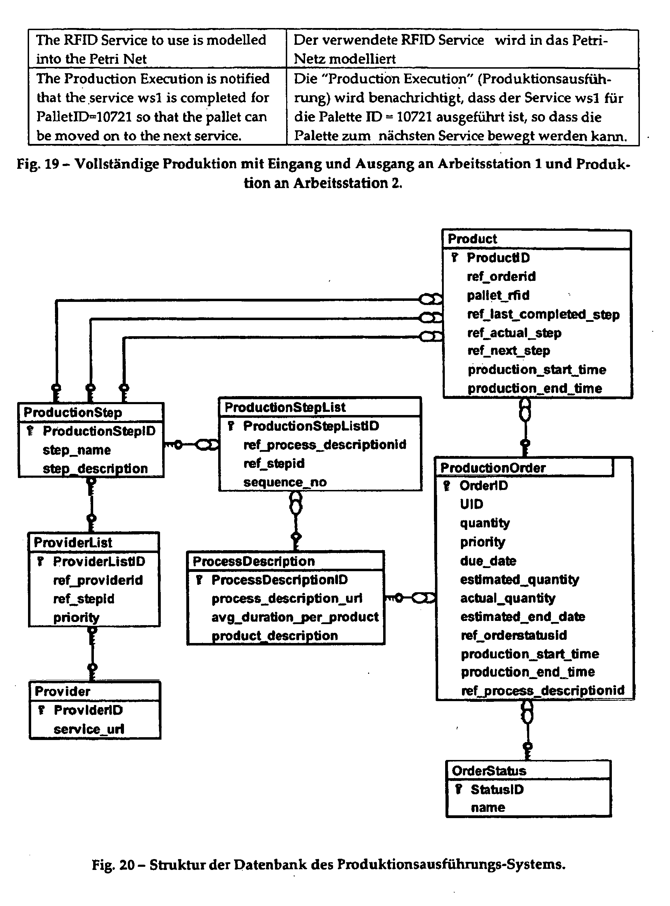

Eine umfangreichere Sequenz zur Produktion eines einzelnen Produkts wird in der folgenden Fig. 19 gezeigt. Das Beispiel bezieht sich auf ein Produkt, für das die Prozessbeschreibung wie folgt lautet:
1. Eine neue Palette wird in den Produktions-Workflow an der Arbeitsstation W1 eingesetzt.
2. Der Einzelproduktionsschritt wird an der Arbeitsstation W2 ausgeführt.
3. Schließlich wird das Produkt wieder an der Arbeitsstation W1 beendet.

Der Workflow beginnt innerhalb der Petri-Netz-Maschine STB_PNE, die die Entscheidung anfordert, mit der Produktion fortzufahren. Um die zu bearbeitende Palette Pzu identifizieren, greift die Engine OE auf die RFID-Nummer des verbundenen RFID-Lesers OSI zu und verwendet dabei den zugehörigen Service. Diese Verbindung wird nach einer konkreten physikalischen Topologie im Petri-Netz modelliert.

Diese Paletten-ID wird verwendet, um den nächsten Service von der Produktionsausführung PES zu erhalten. Durch den zurückgeschickten Service kann die Petri-Netz-Maschine STB_PNE fortfahren. Daraufhin wird die Palette P zum Bestimmungsort bewegt, z. B. zur Arbeitsstation W2. Bei Erreichen des Zielorts der Palette erhält die geführte Produktionseinheit W2für die gegebene Paletten-ID den Befehl ExecuteService. Anschließend führt die Produktionseinheit W2 den Service aus.

Für die Anwendung wird eine PC-basierte HMI als Produktionseinheit verwendet. Dies ist ein Programm, das dem Bediener eine Textnachricht mit dem angefragten Produktionsschritt anzeigt. Der angezeigte Text wird von der Produktionsausführung geliefert. In einem wirklichen System kann die Produktionsausführung weitere Informationen zur Durchführung von Produktionsschritten liefern, wie z. B. ein Programm zum Betrieb eines Manipulators o.Ä..

Die verwendete Produktionseinheit wird vom Bediener bestätigt, nachdem der Produktionsschritt durch Tastendruck beendet wurde. Diese Taste kann entweder Teil der HMI oder anschließend eine physikalische Taste sein. In Fig. 3 wird die Produktionsausführung benachrichtigt, dass der Service "ws1" für die Paletten-ID=10721 abgeschlossen ist. Mit dieser Nachricht kann das Ergebnis des Produktionsschritts ebenfalls geliefert werden, z. B. wenn der Service erfolgreich ausgeführt wurde, wird das Ergebnis="OK" verwendet. Das nächste Mal, wenn für diese Paletten-ID ein Service angefragt wird, wird ein weiterer Service zurückgeliefert. So wird die Palette zum nächsten Service befördern. Die Zeiten zur Vollendung jedes einzelnen Produktionsschritts und zur Herstellung des Gesamtprodukts werden gemessen und in einer Datenbank gespeichert.

Um den Workflow über einen längeren Zeitraum zu demonstrieren, kann die Produktionseinheit so konfiguriert werden, dass sie automatisch läuft. In diesem Fall ist der Service nach einer bestimmten Zeitdauer abgeschlossen. So ist es auch möglich, dass das System automatisch ohne menschliches Eingreifen Einheiten produzieren und Aufträge ausführen kann.

Um weitere Szenarien zu simulieren, können Produktionsschritte mit anderen Ergebnissen als OK versehen werden, z. B. FAILURE (FEHLER), PROCESSING (IN BEARBEITUNG), DEFEKT, NOTONSTOCK (NICHT AUF LAGER).

Die Produktionsausführung speichert die Daten in einer entsprechenden Datenbank (Fig. 19). Die Daten können in zwei Teile aufgeteilt werden. Der erste Teil sind die Definitionen des Produktionsprozesses, der in der Anwendung verwendet wird. Er kann z. B. die erforderlichen Produktionsschritte für eine gegebene URI definieren. Der zweite Teil dient der Annahme und Ausführung der einzelnen Aufträge. In diesem Teil werden ebenfalls zeitrelevante Daten gespeichert.

Informationen zur Durchführung von Produktionsschritten liefern, wie z. B. ein Programm zum Betrieb eines Manipulators o.Ä..

Die verwendete Produktionseinheit wird vom Bediener bestätigt, nachdem der Produktionsschritt durch Tastendruck beendet wurde. Diese Taste kann entweder Teil der HMI oder anschließend eine physikalische Taste sein. In Fig. 3 wird die Produktionsausführung benachrichtigt, dass der Service "ws1" für die Paletten-ID=10721 abgeschlossen ist. Mit dieser Nachricht kann das Ergebnis des Produktionsschritts ebenfalls geliefert werden, z. B. wenn der Service erfolgreich ausgeführt wurde, wird das Ergebnis="OK" verwendet. Das nächste Mal, wenn für diese Paletten-ID ein Service angefragt wird, wird ein weiterer Service zurückgeliefert. So wird die Palette zum nächsten Service befördert. Die Zeiten zur Vollendung jedes einzelnen Produktionsschritts und zur Herstellung des Gesamtprodukts werden gemessen und in einer Datenbank gespeichert.

Um den Workflow über einen längeren Zeitraum zu demonstrieren, kann die Produktionseinheit so konfiguriert werden, dass sie automatisch läuft. In diesem Fall ist der Services nach einer bestimmten Zeitdauer abgeschlossen. So ist es auch möglich, dass das System automatisch ohne menschliches Eingreifen Einheiten produzieren und Aufträge ausführen kann.

Um weitere Szenarien zu simulieren, können Produktionsschritte mit anderen Ergebnissen als OK versehen werden, z. B. FAILURE (FEHLER), PROCESSING (IN BEARBEITUNG), DEFEKT, NOTONSTOCK (NICHT AUF LAGER).

Die Produktionsausführung speichert die Daten in einer entsprechenden Datenbank (Fig. 19). Die Daten können in zwei Teile aufgeteilt werden. Der erste Teil sind die Definitionen des Produktionsprozesses, der in der Anwendung verwendet wird. Er kann z. B. die erforderlichen Produktionsschritte für eine gegebene URI definieren. Der zweite Teil dient der Annahme und Ausführung der einzelnen Aufträge. In diesem Teil werden ebenfalls zeitrelevante Daten gespeichert.

Die Tabellen ProcessDescription mit ProductionStep/ProductionStepList (Produktionsschritt/Produktionsschrittliste) und Provider/ProviderList (Anbieter/Anbieterliste) machen den ersten Teil aus. Für den zweiten Teil werden die Tabellen ProductionOrder (Produktionsauftrag) und Product verwendet.

Verschiedene Betriebsmodi sind im System ERP mit den Auftragsdetails verwendbar. Die folgende Tabelle zeigt die zunächst verwendbaren Prozesse mit den ausgeführten Produktionsschritten.

| **Nr.** | **Name** | **URI** | **Produktionsschritte** |
|---|---|---|---|
| 1 | Auslaufen | wird angegeben | "Auslaufen lassen" (ws1) |
| 2 | Einzelschrittbetrieb | wird angegeben | "Palette einsetzen" (ws1), "Produktion ausführen" (ws2), "Auslaufen lassen" (ws1) |
| 3 | Dreischrittbetrieb | wird angegeben | "Palette einsetzen" (ws1), "Gehäuse und Elektronikteile anschließen" (ws2), "Antenne anbringen und Gehäuse schließen" (ws1), "Qualitätscheck durchführen" (ws2), "Auslaufen lassen" (ws1) |

Die verwendeten Tools und die Engineering-Methodologie wurden mit dem Ziel in dem Fertigungssystem hinzugefügt, Paletten zu den Arbeitsstationen zu transportieren und Flexibilität beim Design und der Wartung des Systems zu schaffen.

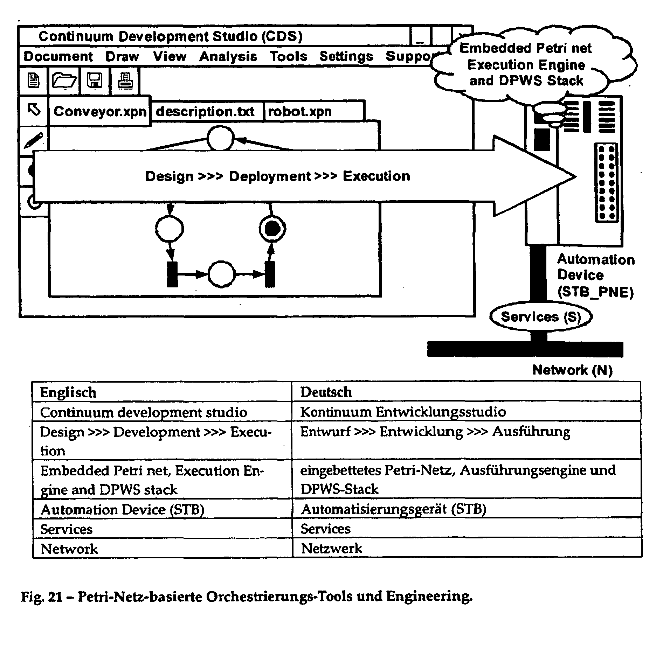

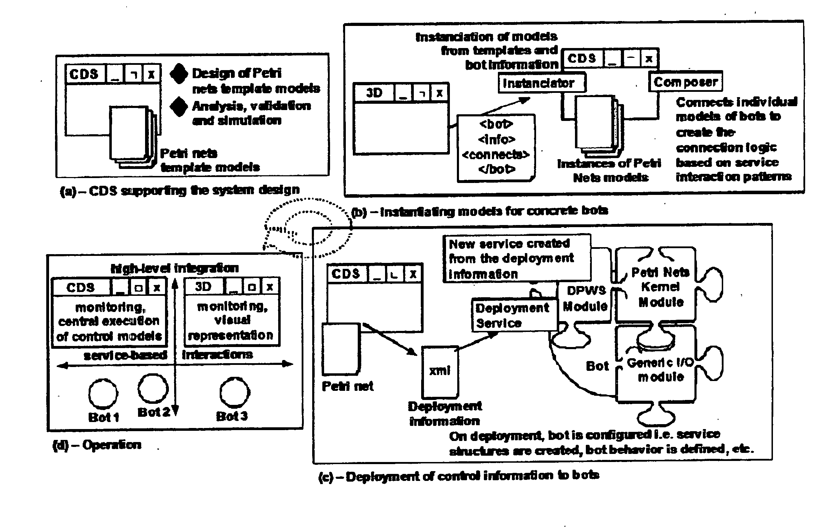

Sobald die Software vollständig abgeschlossen und betriebsbereit ist, stellt sich die Frage, wie man sie zur Spezifikation des Automationssystems einsetzt. Im folgenden Abschnitt werden die zahlreichen erforderlichen Engineering-Schritte vom Systemdesign bis hin zum Betrieb und Neukonfiguration beschrieben, siehe Fig. 21

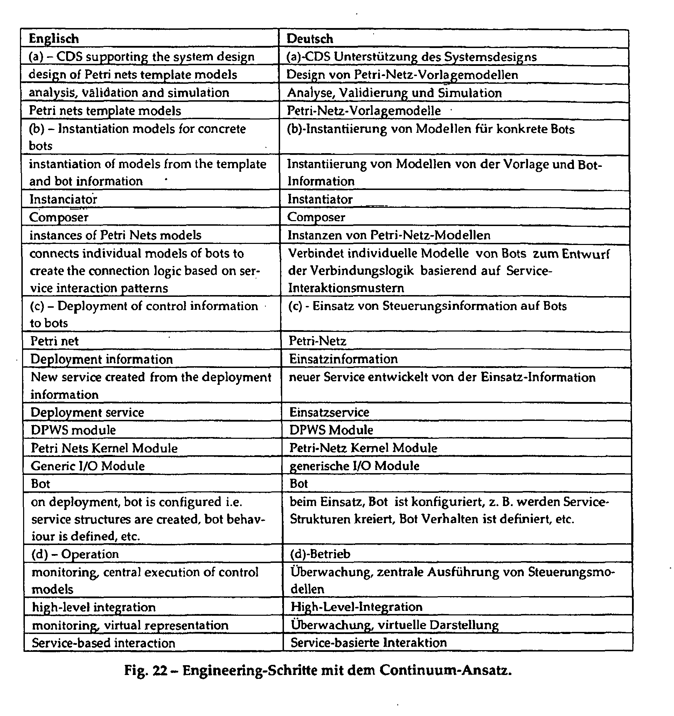

Derzeit erlaubt die Designphase die Verwendung von virtueller Darstellung in einem 3D-Simulations-Tool hauptsächlich, um die Verbindungsdaten im XML-Format für das Continuum Development System CDS zu exportierten. Das CDS wird für das Design und die Analyse der Petri-Netz-Vorlagenmodelle zur Beschreibung des Bot-Verhaltens (Fig. 22.a) verwendet. Wenn die Geräte-/Verbindungsinformationen vom 3D-Simulations-Tool importiert werden, werden vom CDS mehrere Schritte durchgeführt: 1) Instanzen CIM des Petri-Netz-Modells SM für jeden Bot basierend auf den erzeugten Vorlagenmodellen erstellen, 2) Die notwendigen Eigenschaften des Petri-Netz-Modells SM erzeugen, so dass mehrere Parameter der gegebenen Informationen von einem 3D-Simulations-Tool in die Modelle geschrieben werden (z. B. Bot-/Gerätedaten, Verbindungen, ...) und 3) basierend auf der "Erweiterung" der Petri-Netz-Modelle, kann die Modellkomposition zur Erzeugung einer Verbindungslogik und für die Gesamtsystem-Analyse getätigt werden (Fig. 22.b).

Nach Analyse und Simulation (können mit dem CDS und auch mit dem 3D-Simulations-Tool vorgenommen werden, die Services virtueller Geräte zur Verfügung stellen) müssen die Bots nun konfiguriert werden. Der Prozess des Einsetzens eines Services, der seine Logik als ein Petri-Netz-Modell zu einem Bot verkapselt, der ein eingebettetes Petri-Netz-Kernel-Modul aufweist, wird in Fig. 22.c dargestellt. Die Einsatz-Funktionalität ist ein Standardfeature des DPWS und wird als dynamischer Einsatzservice angeboten. Das Ziel und der Einsatz-Service kann durch einen Stacks Built-in Discovery Service gefunden werden. Nach dem Einsatz wird ein neuer ServiceEndpunkt hinzugefügt und die Ausführung der Servicelogik initiiert. Die Einsatzdaten umfassen Daten zum Petri-Netz-Verhaltensmodell, Verbindungen zu Nachbarn (benötigte Services), vom Bot angebotene Services und außerdem zusätzliche Konfigurationsdaten für die weiteren Module des Bots. Der Bot wird sich selbst (und seine Module) konfigurieren und ist im Anschluss betriebsbereit.

Betrieb bedeutet hier autonomes Verhalten der Bots gemäß ihrem definierten Modell, zuzüglich internes Ausnahme-Handling und Anbieten und Nutzen von Services durch unterschiedliche Bots und anderer zum System gehörenden Software-Komponenten (Fig. 22.d). Features für höhere Ebenen im Serviceansatz umfassen zudem den Zusammenschluss von mehreren Services zu einem (Vereinfachung der externen Sicht), laterale Kollaboration zwischen Bots (Anbieten von Services), Dezentralisierung im Vergleich zu einem hierarchischen Steuerungsansatz. Geschäftsintegration (und im Allgemeinen Integration höherer Ebenen) der Fabrikationszelle wird durch Serviceorientierung erreicht. Geschäftsanforderungen werden durch die Produktionsplanung und das Management der Fabrikationszellen durch Überwachen ihres Arbeitsstatus (mittels spezifischer Serien), Deaktivieren/Aktivieren von verschiedenen Routing-Pfaden der Produktion usw. ausgedrückt.

Während des Betriebs kann eine Neukonfiguration erforderlich sein, wenn ein Steuerungsmodell für einen Bot z. B. nicht mehr gültig ist oder Produktionsstrategien geändert wurden. In diesen Fällen müssen die betroffenen Bots angehalten werden (ohne das System zum Stillstand zu bringen), die Services würden dann nicht länger verfügbar sein. Während dieser Zeit können neue Modelle erstellt werden, um ein neues gewünschtes Verhalten zu erzielen. Diese werden dann auf die Bots übertragen, und schließlich kann der Betrieb wieder aufgenommen werden.

Dieser Abschnitt beschreibt die Automations-Bots (mit eingebetteter Orchestrierungs-Engine), die in Steuerungsgeräten STB zur Koordinierung der Produktionsaktivitäten des Szenarios eingesetzt werden. Abhängig von der Verteilung der Automations-Geräte in der Anwendung sollte jedes Gerät einen Automations-Bot, der für seine Aktivität verantwortlich ist, eingebettet haben. Als Beispiel und in Betracht der Fig. 3 kann ein Bot für alle Liftereinheiten und ein anderer für den zentralen Teil des Fördersystems verantwortlich sein. Ein modulareres System (jedoch mit notwendigerweise mehr Geräten und daher mehr Bots) wäre die Definition jeweils eines Bots für jede der 12 Einheiten und der 2 Arbeitsstationen.

Ein Bot besteht aus drei Hauptmodulen:
- DPWS-Kommunikationsmodul KOMM,
- Petri-Netz-Kernel-Modul PNKM,
- Entscheidungshilfe-Modul DSM,
und wird konzeptuell mittels des Frameworks implementiert. Der endgültige Automations-Bot verfügt über kombinierte Funktionalitäten, die ihm seine drei Module verleihen, d. h. der Bot ist ein serviceorientiertes Petri-Netz-Koordinationsmodul mit interner Entscheidungshilfe. Seine Logik wird vom Petri-Netz-Kernel-Modul verwaltet. Es interpretiert ein gegebenes Petri-Netz-Modell. Immer, wenn es laut Modell festgelegt ist, werden die Service-Betriebsvorgänge abgerufen und warten darauf, vom DPWS-Kommunikationsmodul abgerufen zu werden. Konflikte und andere Situationen werden an das Entscheidungshilfe-Modul weitergegeben.

Die Eigenschaften des für das beschriebene Verfahren spezifizierten Automations-Bots können in den folgenden Themen zusammengefasst werden:
- Konfigurierbare Softwarekomponenten mit den dynamischen Einsatzfunktionen des DPWS. Dies führt nicht nur die Konfiguration des Automation-Bot aus, sondern auch die der drei internen Module. Das Petri-Netz-Kernel-Modul würde z. B. die XML-Darstellung eines Petri-Netzes empfangen.
- Definition des aktuellen Services gemäß Einsatzdaten.
- Der Automations-Bot kann gefunden und vorhandene Services können genutzt werden.
- Der Automations-Bot kann ebenso, wenn nötig, Services anfragen (z. B. der aktuelle Status des internen Petri-Netzmodells ist eine Abfrage für einen Service einer anderen Systemkomponente).
- Der Automations-Bot kann bei Vorkommen einer Ausnahme zurückgesetzt werden (z. B. eine Palette wurde an einem anderen Ort platziert).
- Interpretation des Petri-Netzmodells und Koordination der am Gerät verfügbaren Services.
- Laterale Kollaboration mit anderen Bots mittels Serviceorientierung.
- Konflikterfassung und -lösung durch verschiedene Mechanismen: Transitionsprioritäten und Antworten vom lokalen Entscheidungshilfe-Modul. Eine dritte triviale Lösungsmethode kann das einfache Warten eines externen Ereignisses hinsichtlich der Transitionen sein. Dies wird vom Kernel dann jedoch nicht als Konflikt behandelt
- Zugriff auf externe Entscheidungssysteme für Produktionsplandaten (z. B. um den nächsten Produktionsschritt für eine Palette zu erhalten) und/oder über RFID-Lesegeräte.
- Fähigkeit, eine unabhängige Software für PCs laufen zu lassen und sich auch in Automationsgeräte bei Anwendung kleiner Änderungen zu integrieren.

Weitere Informationen über diese Komponenten und Module sind in den Forschungsberichten aufgeführt.

Die Zielsetzung der Anwendung für alle physikalischen Systeme, die im vorigen Abschnitt erklärt wurden, sowie für die Software-Tools und Komponenten ist:
- das Konzept der Serviceorientierung und der Modul-/Komponenten-basierten Ansätze für das Szenario zu prüfen;
- das Befördern der Paletten zur korrekten Arbeitsstation mit einem gewissen Grad an Flexibilität (je nach Produktionsplan);
- das Verwenden höherer Programmierung (z. B. Petri-Netz-basierte Strukturen) zur Zusammenfügung von verschiedenen angebotenen Elementarservices eines Systems;
- das Reagieren auf Ereignisse, die in industriellen Produktionssystemen auftreten können;
- die Definition mehrerer Engineering-Schritte für das Design, die Analyse, den Betrieb und die Wartung des Szenarios;
- die Entwicklung zusätzlicher Software zur Vereinfachung der Engineering-Prozesse solcher Systeme.

Die folgenden Unterpunkte beschreiben Schritt für Schritt die Anwendungsprozeduren.

Gemäß eines weiteren Erfindungsgedankens bezieht sich die Erfindung auf einen HLPN-basierten Ansatz und Tools zur Entwicklung und Anwendung von in Automatisierungssysteme eingebetteten Orchestrierungsmaschinen.

Physikalische Geräte wie Förderer C1-C11 und Lifter L1, L2 werden dem Netzwerk N als logische Geräte LD dargestellt. Diese logischen Geräte LD und ihre Services S laufen auf den STB-Controllern (auch einige von ihnen, wenn am PC-Gateway wie z. B. die RFIDs definiert). Die Spezifikation der Services S der logischen Geräte LD und ihrer Steuerlogik CL wird durch mehrere Prozeduren erreicht:
- STB mit ControlBuild: Logik CL und Services S werden offline mittels ControlBuild-Tool spezifiziert und dann auf das STB angewendet;
- PC-Gateway: Logik CL und Services S werden fest in diese Software einprogrammiert (z. B. Services von RFID-Antennen).

Um diese Services zu starten, ist ein BootP/DHCP-Server zu verwenden, um den Geräten IP-Adressen zuzuweisen. In diesem Fall wurde ein BootP-Server mit einer Konfigurationsdatei verwendet, die alle STBs umfasst.
Die folgende Tabelle fasst alle verfügbaren logischen Geräte und ihre Eigenschaften zusammen:

| **Physikalisches Gerät** | | **Logisches Gerät** | **Service** | |
|---|---|---|---|---|
| **ID** | **Prozedur** | **Beschreibungsname** | **Typ** | **WSDL** |
| C1-C11 | ControlBuild | 01MDST#1, 02MDSC#2, 03MDST#3, 04MDST#4, 05MDSC#5, 06MDST#6, 07MDST#7, 08MDSC#8, 09MDST#9, 10MDSC#10, 11MDSC#11 | TransferType/Control | Transfer.wsd1 |
| L1,L2 | ControlBuild | 01LIFTER#1, 02LIFTER#2 | LifterType/Control | Lifter.wsdl |
| RFIDs | PC-Gateway | 02_OSITrack#2, 04_OSITrack#4, 06_OSITrack#6, 08_OSITrack#8 | OSITrack | OSITrack.wsdl |

Um die Services zu beschreiben und für die Clients nutzbar zu machen, werden mehrere WSDL v1.1 (Web Services Description Language) verwendet. Die Endpunkte EP der logischen Geräte LD werden mit den unten aufgeführten entsprechenden Servicedaten assoziiert:

| **WSDL** | **Betrieb** | **Typ** | **Eingangsparameter** | **Ausgangsparameter** | **Beschreibung** |
|---|---|---|---|---|---|
| Transfer.wsdl | TransferIn | Ein/Aus | direction(int) | response(int) | Startet einen "Transfer In"-Vorgang von einem angegebenen Port. Sendet sofort Bestätigung, ob Abfrage möglich ist oder nicht. |
| | | | | = *0 (OK)* | |
| | | | | - *1 (belegt)* | |
| | | | *= 1, 2, 3 oder 4 (Eingangsport)* | = *2 (unbekannte Richtung)* | |
| | | | | = *3* (*keine Palette beladen)* | |
| | | | | = *4 (Palette beladen)* | |
| | | | | = *5 (Antwortfehler*) | |
| | TransferStatus | Evout | - | transferstatus(int) | Ein Event wird gesendet, wenn ein "Transfer In"-Vorgang gestartet oder beendet wird |
| | | | | = *1* (*belegt*) | |
| | | | | = *5* (*fertig)* | |
| | | | | = *666* (*Fehler*) | |
| | TransferOut | Ein/Aus | direction(int) | response(int) | Startet einen "Transfer Out"-Vorgang zu einem angegebenen Port hin.Sendet sofort Bestätigung, ob Abfrage möglich ist oder nicht. |
| | | | | = *0 (OK)* | |
| | | | | = *1 (belegt)* | |
| | | | = *1, 2, 3 oder 4 (Ausgangsport)* | = *2 (unbekannte Richtung)* | |
| | | | | = *3 (keine Palette beladen)* | |
| | | | | = *4 (Palette beladen)* | |
| | | | | = *5 (Antwortfehler)* | |
| | TransferStop | Ein/Aus | - | response(int) | Stoppt einen "Transfer In/Out"-Vorgang. Grund: Das Gerät hat keine Sensor-Fähigkeiten, um zu erfassen, ob eine Palette den Förderer des Geräts verlassen hat. |
| | | | | = *0 (OK)* | |
| | CctStatus | Ein/Aus | - | response(int) | Stoppt einen "Transfer In/Out"-Vorgang. Grund: Das Gerät hat keine Sensor-Fähigkeiten, um zu erfassen, ob eine Palette den Förderer des Geräts verlassen hat. |
| | | | | **=** (*3 keine Palette beladen*) | |
| | | | | = *(4 Palette beladen)* | |
| Lifter.wsd1 | IFtransferOut | Ein/Aus | IPtransferOutParam(short) | OPtransferOutStatus(short) | Startet einen "Transfer Out"-Vorgang zu einem angegebenen Port hin. Sendet sofort Bestätigung, ob Abfrage möglich ist oder nicht. |
| | | | | = *1, 2, 3 oder 4 (ok)* | |
| | | | = *1, 2, 3 oder 4* | = *111 (keine Palette beladen)* | |
| | | | | = *700 (belegt)* | |
| | IFgetStatus | Ein/Aus | IPgetStatusParam(short) | OPgetStatusResponse(short) | Zum Empfangen des Status von zwei Förderersensoren. Daher kann geprüft werden, ob eine vollständig beladene Palette (zwei Sensoren an), eine teilweise beladene Palette (ein Sensor an) oder keine Palette (alle Sensoren aus) vorhanden ist. |
| | | | | = *0 (keine Palette beladen)* | |
| | | | | = *11 (Palette beladen)* | |
| | | | =0 | = *15 (1 Sensor)* | |
| | | | | = *51 (1 Sensor)* | |
| | OFlifterA/ OFlilterB | Evout | - | OPlifterAstatus(short)/ | Ein Event wird gesendet, wenn ein Betriebsvorgang gestartet oder beendet wird. |
| | | | | OPlifterBstatus(short) | |
| | | | | = *10 (fertig)* | |
| | | | | = *700 (belegt)* | |
| | | | | = *500 (manuell)* | |
| | | | | = *800 (abgebrochen)* | |
| | IFinitialize | Ein/Aus | IPinitializeParam(short) | OPinitializeStatus(short) | Die Referenzbewegung wird ausgeführt. Sollte jedes Mal zu Beginn des Lifterbetriebs vorgenommen werden. |
| | | | | = *1 (OK)* | |
| | | | | = *10 (fertig)* | |
| | | | = *0* | = *500 (manuell)* | |
| | | | | = *700 (OK)* | |
| | | | | = *800 (abgebrochen)* | |
| | IFtransferStop | Ein/Aus | IPtransferStopParam(short) | OPtransferStopStatus(short) | Stoppt einen "Transfer In/Out"-Vorgang. |
| | | | = *0* | = *10 (OK)* | |
| | IFtransferIn | Ein/Aus | IPtransferInParam(short) | OPtransferInStatus(short) | Startet einen "Transfer In'-Vorgang von einem angegebenen Port. Sendet sofort Bestätigung, ob Abfrage möglich ist oder nicht. |
| | | | | = *1*, *2*, *3 oder 4 (ok)* | |
| | | | = *1, 2, 3 oder 4* | = *333 (Palette beladen)* | |
| | | | | - *700 (belegt)* | |
| | IFlifting | Ein/Aus | IPliltingPos(short) | OPtiftingStatus(short) | Der Förderer wird gehoben oder abgelassen, je nach ausgewähltem Port. |
| | | | | = *1, 2, 3 oder* 4 *(ok)* | |
| | | | = 1, 2, 3 *oder 4 (Eingangs-*/*Ausgangsport)* | = *500 (manuell)* | |
| | | | | = *700 (belegt)* | |
| | | | | = *800 (abgebrochen)* | |
| OSITrack.wsd1 | GetID | Ein/Aus | - | id(string) | Sendet einen Befehl an das Modul, um die IP-Adressen auszulesen |
| | | | | = *Eindeutige ID des RFID-Etiketts* | |
| | Schreiben | Ein/Aus | Registers2(Start(int), Amount(int), Value(string)) | Response(Identifier(int), Info(string)) | Mehrere Register schreiben (0 -55 auf Etikett frei) |
| | Lesen | Ein/Aus | Registers(Start(int), Amount(int)) | Response(Identifier(int), Info(string)) | Mehrere Register lesen (0 -55 auf Etikett frei) |

### Anmerkungen:

- Bei Verwendung von Identifikationssystemen wie OSITrack ist das Lesen/Schreiben mehrerer Register bei der derzeitigen PC-Gateway-Implementierung nicht möglich. Jedoch werden für die Anwendung keine Daten außer der ID des Etiketts verwendet, keine benutzerdefinierten Daten werden auf das Etikett geschrieben oder von ihm gelesen
- Lifter müssen zuerst initialisiert werden, bevor sie andere Betriebsvorgänge nutzen können (auch bei Event Subscription)
- TransferIn/TransferOut-Betriebsvorgänge halten automatisch an (und senden einen entsprechenden Event), falls die Palette komplett beladen/entladen wurde.
- Manuelles Platzieren einer Palette auf eine Fördereinheit generiert keinen Event. Der Benutzer muss also den Prozess initialisieren, indem er den TransferOut(0)-Betriebsvorgang aus dem Orchestrator für die Einheit aufruft, nachdem die Palette platziert wurde.
- Nach dem manuellen Entfernen einer Palette von einer Fördereinheit muss der Betriebsvorgang TransferStop aus dem Orchestrator aufgerufen werden, um auf Gerätestatus zurückzusetzen.
- WSDL, die von ControlBuild-Tools exportiert wurden, müssen angepasst werden, da der in der WSDL spezifizierte Porttyp und der von der Servicebeschreibune angebotene nicht dieselben sind.
- Von ControlBuild exportierte Gerätebeschreibungs-Dateien DDF werden nach Einsatz direkt im Dateisystem des STB modifiziert, um benutzerdefinierte Werte für Gerätebereich und -typ einzustellen.

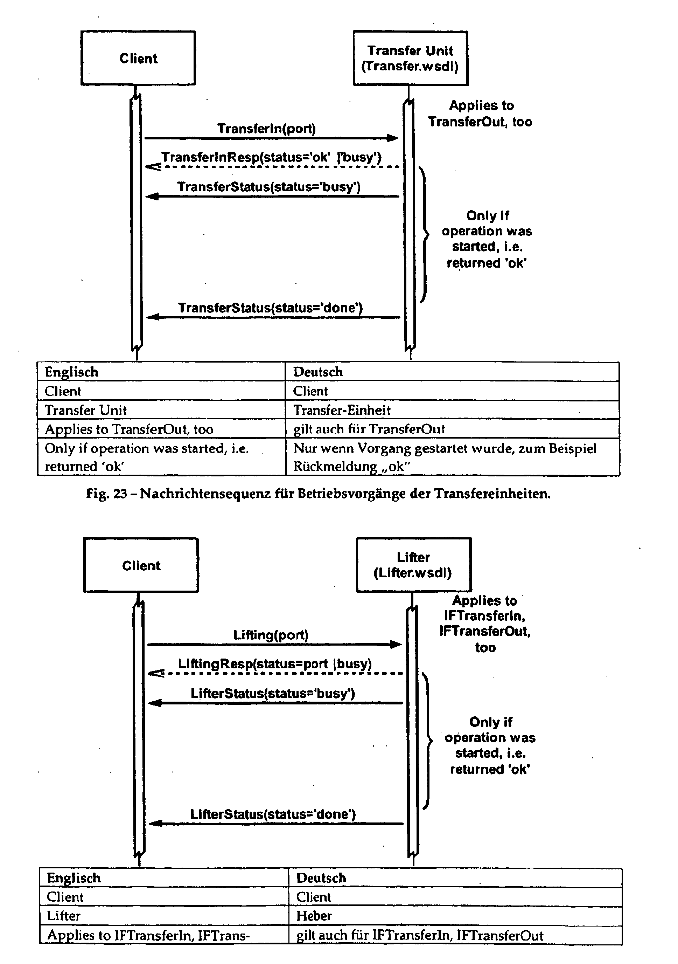

Die Nachrichtensequenz der Transfereinheiten (Förderer) C1-C11 wird in der folgenden Fig. 23 für die beiden Betriebsvorgänge TransferIn und TransferOut ausgedrückt.

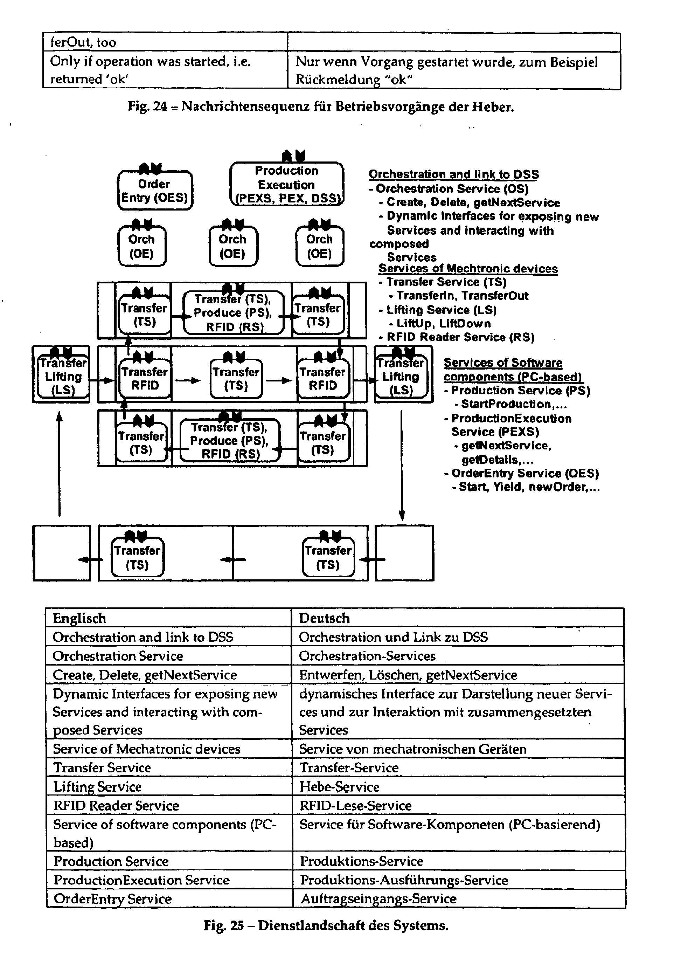

Die Nachrichtensequenz der Lifter L1, L2 wird in Fig. 24 für die drei Betriebsvorgänge IFtransferIn, IFtransferOut und IFlifting bereitgestellt.

Das vorgeschlagene und im System verfügbare Service-Landschaft ist in Fig. 25 dargestellt. Neben den bereits erklärten "Elementar"-Services S sind die Orchestratoren OE, die in den Geräten STB verteilt sind, und das Produktionsausführungssystem PES (in einem PC integriert) mit den externen Aufträgen das "Herz" einer Applikation, denn sie agieren als Koordinator (Komposition und Durchführung von Services) und Schnittstelle für die Aktivitäten der Service-orientierten Automations- und Produktions-Komponenten und -prozesse.

Verhaltensmodelle werden in Abhängigkeit der verfügbaren Elementarservices S (und ihrer Betriebsvorgänge) sowie das vorausgesetzte Verhalten der Geräte erstellt. Editiervorgänge der Steuerungsmodelle wurden mithilfe des Continuum Development Studios vorgenommen.

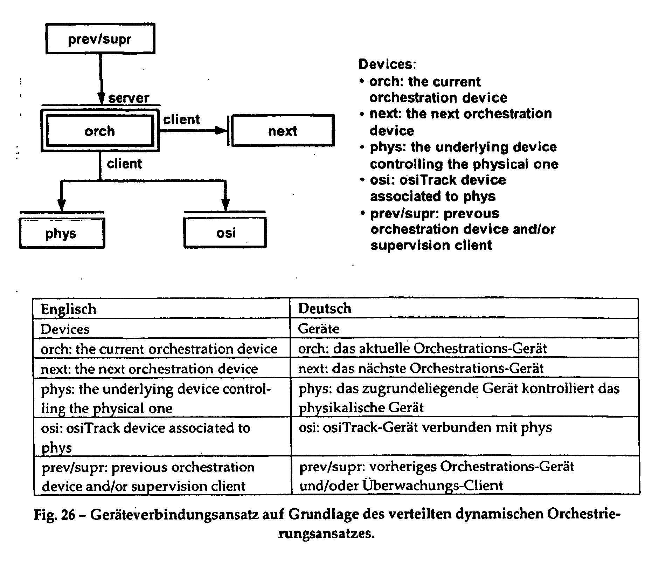

Der Geräteansatz und die Interaktion für jede Einheit werden in Fig. 26 erklärt.

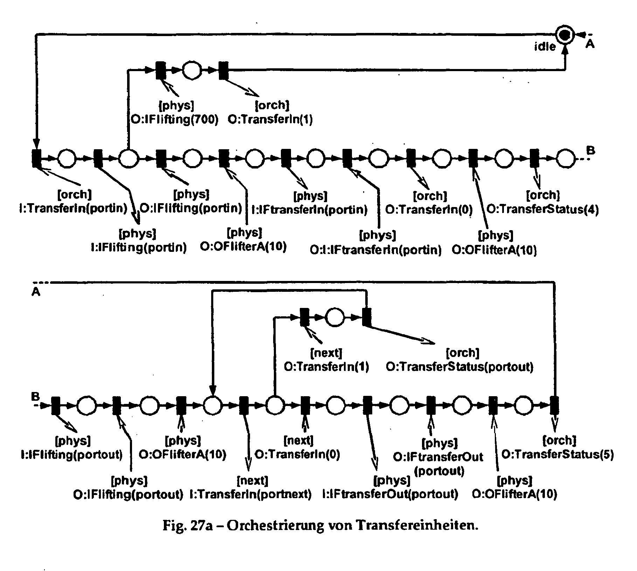

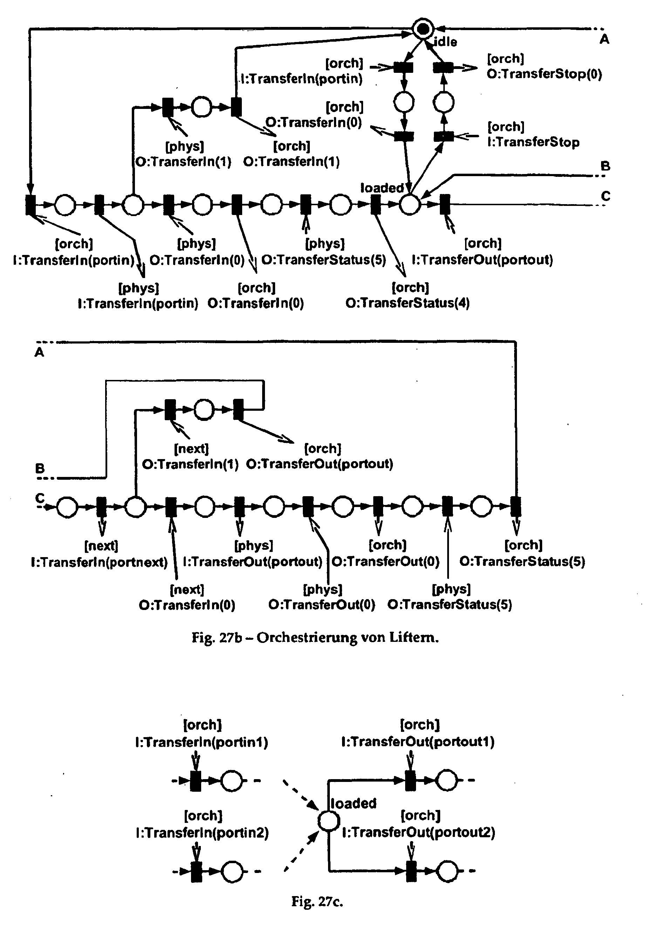

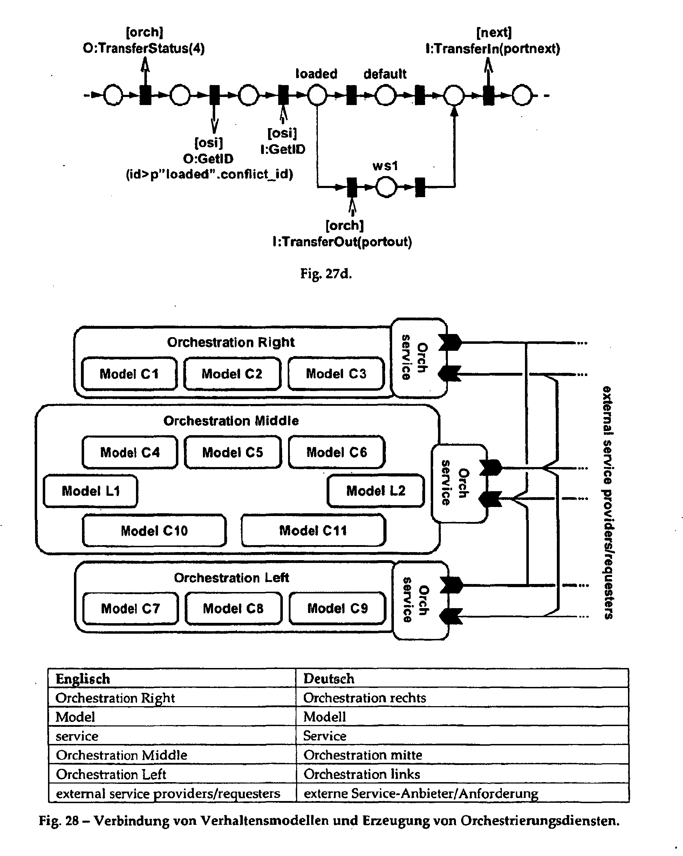

Fig. 27 a) stellt die Orchestrierung einer Transfereinheit (oben) und in Fig. 27 b) die eines Lifters (unten) dar.

Anmerkungen zu Fig. 27 a) und b):
- *portin:* Eingangsport des aktuellen Orchestrators; *portnext:* Eingangsport des folgenden Orchestrators; *portout:* Ausgangsport des aktuellen Orchestrators; *status=4:* Palette beladen.
- *I*/*O:operation(parameter):* Betriebsvorgänge zum Senden (O) oder Empfangen (I) (aus Serversicht). Falls eine Nachricht empfangen werden soll und einen Parameter aufweist, eifolot die Transition nur, wenn die Parameter übereinstimmen.
- Für manuelles Platzieren an WS1 und WS2 jeweils I:TransferIn(11) bzw. I:TransferIn(12) verwenden.
- TransferStop muss aufgerufen werden, wenn die Palette manuell entfernt wird.
- Die Antwort "Belegt" wird durch die Antwort O:TransferOut(portout) oder den Event O:Transferstatus(portout) mit portout = 101-111 (für Förderer), 112 und 113 (für Lifter) angegeben.
- Zur manuellen Überprüfung des Status "Belegt" und zum Entfernen der "Workstation Stop/Resume"-Funktion (Arbeitsstation anhalten/weiterbetreiben), ändern:
- 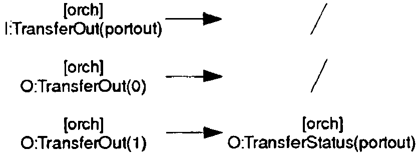
- Dem manuellen Platzieren/Entfernen der Paletten muss eine getStatus-Abfrage vorausgehen, um die Sensordaten der Fördereinheiten zurückzusetzen.
- Bei mehreren Eingangs- und Ausgangsports sind Zweigverbindungen gemäß Fig. 27 c) vorzusehen:
- Bei Entscheidungen an den Arbeitsstationen (Palette entweder durchlassen oder Betriebsvorgang an ihr ausführen) und den Konfliktpunkten an C4/C6 (welchen Pfad wählen) müssen Änderungen im zentralen Teil an der Stelle des Konflikts vorgenommen werden. Fig. 27 d) zeigt ein Beispiel für die Arbeitsstation W1:
   Konflikte sind Knoten in dem auf Petri-Netz-modellierten System, an dem alternative Pfade zu wählen sind. Dies bedeutet, dass es mehr als eine Transition wirklich schalten kann. Dies entspricht einer Situation, in der Entscheidungen getroffen werden müssen.
   Im Allgemeinen muss zum Aufrufen der Entscheidungshilfe DSS an einem Punkt im Netz die Paletten-ID zunächst über den OSITrack-Servicevorgang GetID abgefragt werden. Der Parameter der Abfrage (id>p"loaded".conflict_id) des "geladenen" Teils muss mit der Orts-ID des Konflikts (im Beispiel als "loaded"/geladen gekennzeichnet) ersetzt werden. Anschließend besitzen die ersten Stellen von jeder der aus dem Konflikt resultierenden Zweigverbindung eine Eigenschaft "services" mit kommagetrennten Werte derjenigen Services, die zu diesem Zweig führen. Im Beispiel werden der Service "ws1", der die Palette anhält und wartet, bis ein TransferOut von der Arbeitsstation W1 gegeben wird (nach Abschluss des Betriebsvorgangs über der Palette) und ein "Standard"-Service für alle anderen Paletten gezeigt, die keine Beziehung zur Arbeitsstation 1 haben. In der Laufzeit wird die zuständige Orchestrierungs-Engine beim Konflikt "loaded" anhalten, die Palettendaten an die Entscheidungshilfe DSS weiterleiten und auf eine Antwort warten (die angibt, welche mit einem bestimmten Service assoziette Transition vorgenommen werden soll).
- Wechsel von OFlifterA zu OFlifterB, wenn das Modell für den Lifter dem von Lifter B entspricht.
- Diese Orchestrierung (siehe Fig. 27) kann für folgende Werte verwendet werden:
   - Normale Transfersituation;
   - Dieser Förderer ist belegt;
   - Der nächste Förderer ist belegt;
   - Manuelle Palettenbeladung/-abladung;
   - Halt wegen Arbeitsaktivitäten o.Ä. in der Prozessmitte;

Die folgende Tabelle zeigt die Details für die Modellierung jedes Petri-Netzmodells und das entsprechende Gerät.

| **Modell** | **Modelltyp** | **Arbeitsstation (+ manuelles Platzieren/Entfemen der Paletten)** | **Mehrfach-I/O** | **Konflikte** |
|---|---|---|---|---|
| C1,C3,C5,C7,C9,C10,C11 | Transferein heit | Nein | Nein | Nein |
| C2,C8 | Transferein heit | Ja | Nein | Ja |
| C4,C6 | Transferein heit | Nein | Ja | Ja |
| L1,L2 | Lifter | Nein | Nein | Nein |

Analyse und Validierung von Modellen werden mittels der Analysefunktion des Continuum Development Studios durchgeführt. Die Analyse basiert auf der Überprüfung und Bestätigung von statischen und dynamischen Modelleigenschaften. Die Validierung basiert auf einem Isomoiphismus zwischen Modelleigenschaften und Spezifikationen der modellierten Service-orientierten Automations- und Produktions-Komponenten und -Prozessen. Wenn das Modell z. B. eine Transitions-Invarianz hat und eine "Lebendigkeit-Eigenschaft" aufweist, entspricht die Transitions-Invarianz der Existenz eines Grund-Pfads (Grund-Service-Komposition/Orchestrierung).

Nachfolgend wird ein eigeneifinderisches Verfahren zur Verbindung von Verhaltens-/Orchestrierungsmodellen und der Erzeugung von Orchestrierungs-Services beschrieben.

Die Orchestrierungsmodelle können über die Ports auf zwei verschiedene Arten miteinander verbunden werden:
- Petri-Netz-Ersteller: Das zur Continuum Development System CDS gehörende Tool ermöglicht die Erzeugung eines neuen Modells, das auf der Verbindung der einzelnen basiert. Für die Verbindung müssen Daten in den Petri-Netz-Modellen gesetzt werden, und es ist nötig, eine XML-Verbindungsdatei zur Beschreibung, welche Modelle über welche Ports verbunden werden, zu definieren.
- Mechanismus für Service-Abfrage/-Antwort/-Event: dies ermöglicht eine wechselseitige Kommunikation von mehreren Orchestrierungs-Engines und ihrer jeweiligen Modelle über Anbieten und Nutzen von Services.

Die in Fig. 28 dargestellte Verbindungsstrategie wird im System verwendet. Das Kompositions-Tool wird verwendet, um die Modell-Orchestrierung Rechts (basierend auf den Modellen CM der Komponente C1-C3), Orchestrierung Mitte (basierend auf den Modellen CM der Komponenten C4-C5, L1, L2, C10, C11) und Orchestrierung Links (basierend auf den Modellen CM der Komponenten C7-C9) zu generieren. Die generierten Modelle kommunizieren untereinander (zum Durchführen von Transfer-Betriebsvorgängen der Paletten) mittels Serviceaufruf ("TransferIn/TransferOut"-Mechanismus).

Der Einfachheit halber und außerdem, um die Kompositionsfunktion in einer standardgemäßen und wiederverwendbaren Art zu demonstrieren, implementieren die erzeugten Orchestrierungs-Service dieselbe Transferschnittstelle wie die Förderer mit einigen Besonderheiten, siehe [orch] Gerät Fig. 27 a) und b). Daher können die Orchestrierungs-Services ebenso progressiv erstellt werden wie die Transfereinheiten zuvor.

Sobald Modelle erstellt und validiert werden, können sie zur Konfiguration der Orchestrierungs-Engine-Geräte STB_PNE verwendet werden. Dies erfolgt mittels Continuum Development System CDS und zusätzlichen Hilfsmitteln, um die Daten auf die Geräte anzuwenden.

Zum Setup wird lediglich die Anwendung ausgeführt, die in Echtzeit auf die Anfrage der Orchestrierungs-Engine antwortet.

Auf Grundlage eines von der Orchestrierungs-Engine angebotenen Services (Transferservice) wird die Ausführung des Modells gestartet. Normalerweise startet die Ausführung sofort nach dem Einsatz.

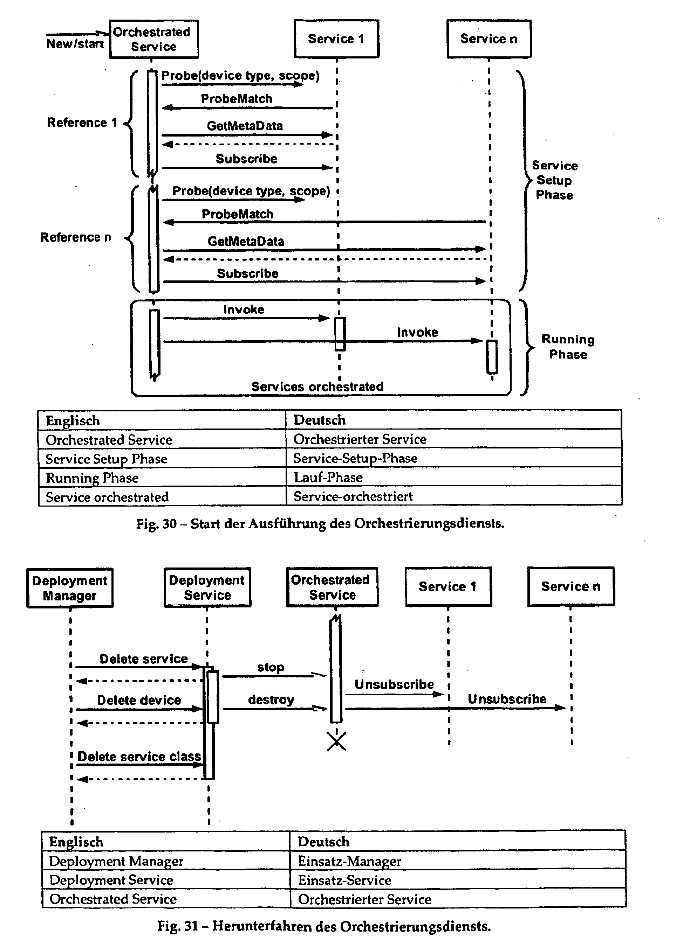

Die Fig. 31 zeigt den Vorgang des Herunterfahrens.

Details zu Verwendungsfällen:
- Verwendung des Continuum Development Tools CDS und zusätzlicher Software zur Konfiguration des Automationssystems:
   - Design und Analyse der Automationsmodelle in Petri-Netz-Formalismus für Fördermodule.
   - Einsatz in Automationssteuerugen mit eingebetteter Petri-Netz-Orchestrierungs-Maschine.
   - Manuelle Definition von Produktionsaufträgen für Paletten.
- Platzieren einer Palette in die Arbeitsstation (beladen) und automatisches Weiterleiten zur gewünschten Arbeitsstation nach einem Produktionsplan:
   - Manueller Beladebefehl einer Palette mittels einer der Arbeitsstationen.
   - Ausführung der Verhaltensmodelle, die einzelne Fördergerät orchestrieren und die Palette transportieren.
   - Lösung von Konflikten an Kreuzungsknoten (alternative Services stehen zur Wahl), an denen Entscheidungsabfragen bei Ankunft der Palette an das Produktionsausführungssystem gerichtet werden. Die Produktionsausführung gibt dann als Antwort die korrekte Richtung der Palette vor (beim Aufrufen eines und nur eines entsprechenden Services aus einem der möglichen zur Verfügung stehenden Services), die anschließend die spezifische Logik aktiviert und die Palette an den gewünschten Zielort bringt.
   - Die Palette kommt an der Arbeitsstation an und kann zu Betriebszwecken angehalten werden.
- Platzierung einer zweiten Palette und gegenseitige Orchestrierung beider Paletten:
   - Die gleiche Prozedur wie bei der ersten Palette, nur mit anderem Arbeitsplan.
   - Wenn sich die Paletten auf dieselbe Art und Weise kreuzen (Versuch einer Anfrage an dasselbe Transportmodul) wird die Orchestrierung automatisch die zuerst ankommende Palette bearbeiten und so lange auf die zweite warten, bis der Transport der ersten abgeschlossen ist.

Die folgende Tabelle zeigt die Funktionen, die mit dem angegebenen Ansatz und den vorgeschlagenen Tools ausgeführt werden können.

| **Funktionen** |
|---|
| 1. EINBETTUNG VON WEBSERVICES IN INDUSTRIELLE STEUERUNGEN: |
| 1.1. Eingekapselte Gerätefunktionalität durch Webservices und eingebettete industrielle Steuerungen (Schneider-STB-I/O-Gerät) durch DPWS-Stack. |
| 1.2. Steuerung veralteter Geräte mit Service-Gateways (PC-basiert, für OSITrack RFID-Lesegeräte) |
| 2. SERVICE-ORCHESTRIERUNG: |
| 2.1. Modellbasierte Orchestrierungs-Engines (Petri-Netz, höhere Ebene) eingebettet in industrielle Steuerungen (Schneider-STB-I/O-Gerät). |
| 2.2. Service-Orchestrierung auf niedriger Ebene unter Einhaltung der Topologie der mechatronischen Geräte, die diese Services hosten. |
| 3. KONFLIKTLÖSUNG DURCH EIN PRODUKTIONSAUSFÜHRUNGSSYSTEM: |
| 3.1. Entscheidungshilfe am Konfliktpunkt basierend auf lokalen Daten (von mechatronischen Geräten angebotene Services) und auf Grundlage von Daten höherer Ebenen (angebotene Services, die laufende Produktionsaufträge und -anforderungen betreffen). |
| 4. GESCHÄFTSINTEGRATION DURCH WEBSERVICE-SCHNITTSTELLEN: |
| 4.1. Aktualisierungen von Produktionsaufträgen und Auftragsstatus werden vom ERP/MES-System an das Werkssystem gesendet |
| 4.2. Unternehmensübergreifende Integration durch Cross-Layer und eventbasierte Architektur (SIA) für in Netzwerke eingebettete Geräte. |

Gemäß eines dritten Erfindungsgedankens bezieht sich die Erfindung auf eine modelbasierte Service-Orchestrierungs-Engine verbunden mit einem Decision Support System.

Die modelbasierte Service-Orchestrierungs-Engine nutzt als Modellierung und Logiksprache einen Petri-Netz Dialekt: High-Level-Petri-Net (HL-PN). Die HL-PN wurde um Elemente erweitert, um Web-Service spezifische Eigenschaften direkt im HL-PN Model abzubilden: Service- und Datenkontrakte (Service and data contracts), sowie Konfiguration der DPWS Discovery. Die Modelle können allerdings auch um weitere Eigenschaften erweitert werden. Neben DPWS-konformen Web Services können auch andere Nachrichten- bzw. Ereignis-orientierten Kommunikationsschichten konfiguriert werden.

Petri-Netze sind geeignet, konkurrierende und nebenläufige Prozesse mit verteilten Ressourcen abzubilden, welche auf einer limitierten Menge an Software und Hardware Ressourcen operiert. Der grundlegende Ansatz ist, jede Komponente eines Systems einzeln zu modellieren und mit logischen Schnittstellen auszustatten, welche eine (automatisierte) Komposition der Modelkomponenten zu einem statischen Gesamtmodel des Systems erlauben. Es werden entsprechend der realen Topologie des Systems die Modelinstanzen miteinander verschaltet. Dadurch, dass die Komponentenmodelle alle Schnittstellen bereitstellen, enthält das Gesamtmodel alle prinzipiell möglichen Ablaufpfade. Am Beispiel eines Materialflusssystems bedeutet dies, dass ein aus Transportkomponenten bestehendes System alle Flusspfade enthält, welche durch die Verbindung der Transportelemente auch einen physikalischen Transport von Material ermöglichen. Im Trivialfall kann das System lineare Pfade enthalten und somit der Prozess quasi sequentiell ablaufen, in komplexeren Kompositionen könnte der Prozess etliche Pfade mit mehreren Gabelungen und Verbindungen enthalten, wodurch zur Laufzeit alternative Ablaufpfade gewählt werden können. Die Gabelungen und Verbindungen in solch komplexen Prozessen werden als Konfliktknoten (conflict nodes) im Petri-Netz modelliert. Konflikte in einem Petri-Netz Model können unterschiedliche Bedeutungen im realen System haben. Beispielsweise könnte eine Palette auf einem Transportelement in verschiedene Richtungen transportiert werden, oder, zwei Teilprozesse "konkurrieren" um dieselbe Ressource.

Einige Probleme können durch einfache Algorithmen gelöst werden, z.B. zufällige Auswahl eines Prozesspfades, allerdings sind solche Lösungen global gesehen ineffizient, oder sogar gefährlich für bestimmte Topologien, da dort Dead-locks entstehen und der Prozess blockiert ist. Somit ist klar, dass Teilprozesse nicht nur lokal begrenzt synchronisiert werden dürfen, sondern in einem erweiterten Kontext. Diese Probleme sind nicht neu und schon durch Enterprise Resource Planning ERP / Production Execution System (MES) systems wenigstens teilweise gelöst.

Für die Orchestrierungs-Maschine und ein "orchestriertes" System von Services wurde eine Architektur gewählt, welche eine Abtrennung der Entscheidungsalgonithmen und der Service Orchestrierung ermöglicht. Es existiert eine spezielle Schnittstelle zwischen der Orchestrierungs-Maschine und dem sogenannten Entscheidungs-Hilfe-System (Decision-Support-System), um Entscheidungsanfragen, -antworten und Metadaten für die Entscheidungsfindung auszutauschen. Auf der Ebene der Orchestrierung werden sog. lokale Entscheidungen getroffen, welche auf einfachen Algorithmen beruhen und beispielsweise dann eingreifen, um Konflikte kurzerhand aufzulösen, wenn das übergeordnete Decision-Support-System (DSS) keine Entscheidung getroffen hat. Auf unterer Ebene werden also Entscheidungen getroffen welche rein auf Kenntnis der Modelle und dem aktuellen Zustand der Modelle beruhen.

Aus Sicht der Orchestrierung (bottom-up) kapselt das DSS die oberen Systeme als Service für Entscheidungsfindung, ohne zu wissen, auf welchen Algorithmen die Entscheidung beruht.

Aus Sicht eines Enterprise Ressource Planning (ERP) (top-down) kapselt das DSS das Produktions- bzw. Fertigungssystem als Manufacturing Execution System (MES) Service mit Schnittstellen für Produktionsauftragseingang und Produktionsüberwachung. Das ERP System hat keine detaillierten Kenntnisse über die Automatisierungsprozesse, sondern lediglich über Produktionsaufträge und deren Status.

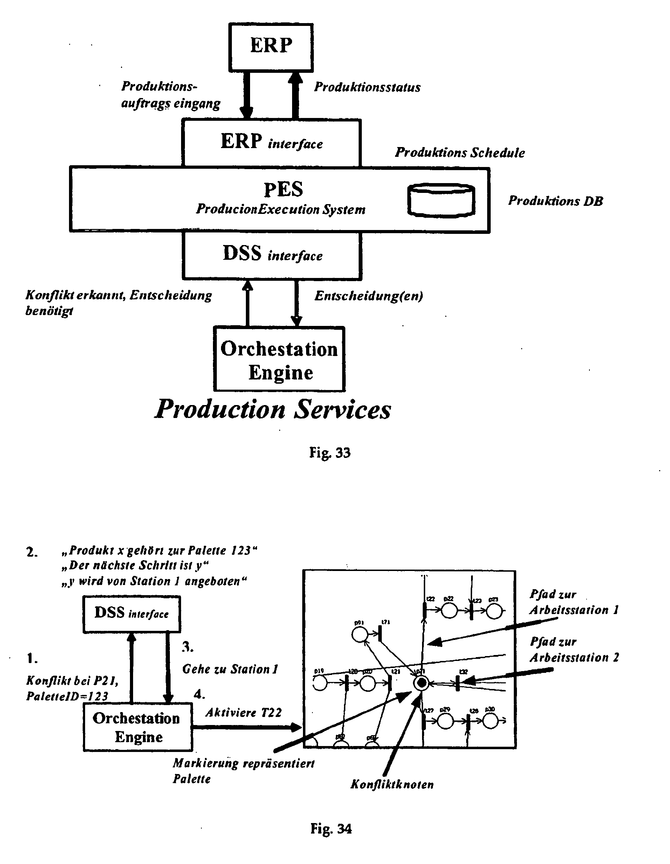

Beispiel gemäß Fig. 33 und 34: Für ein Electronic Assembly Produktionssystem PS wurde eine Produktions-Ausführungs-System PES Komponente (Production Execution = PE) entwickelt, welche eine Schnittstelle DSS_I für die Service Orchestrierung OE und die Schnittstelle ERP_I für ein Enterprise Recource Planing System ERP bereitstellt. Ein ERP System ist somit in der Lage, Produktionsaufträge an das Produktions-Ausführungs-System PES zu senden. Das Produktionssystem nutzt Paletten P, welches unfertige Produkte zu verschiedenen Arbeitstationen W1, W2 zur Bearbeitung senden kann. Die "Konfliktknoten" im Model sind u.a. die Stellen, wo Transportelemente C1-C11 mehrere Ein- und Ausgänge haben und Paletten P zu unterschiedlichen Arbeitstationen W1, W2 leiten können. Das Produktionssystem PS detektiert und identifiziert Paletten P durch RFID-Tags OSI, welche die Paletten-ID enthält. Mithilfe der Paletten-ID kann das Produktionssystem PS an Konfliktpunkten das Produktions-Ausführungs-System PES über die DSS Schnittstelle fragen, wo die Palette hinzuleiten ist. Das Produktions-Ausführungs-System PES kennt das zur Palette P gehörige Produkt, dessen Bearbeitungsstatus und die nächsten Arbeitsschritte. Aufgrund der Kenntnis aller laufenden Aufträge, aller Produktionsprozesse, der Auslastung der Arbeitsstationen (momentan und geplant), der Verfügbarkeit von Produktionsressourcen, kann das Produktions-Ausführungs-System PES entscheiden, an welche Arbeitsstation das Produkt zu leiten ist.

**Abkürzungen:**

| | | |
|---|---|---|
| API | ApplicationProgramming Interface | = Anwendungs-Programmier-Interface |
| BPEL | Business Process Execution Language | = Unternehmensprozess-Ausführungs-Sprache |
| BPML | Business Process Management | = Language Unternehmensprozess-Management-Sprache |
| CMIP | Common Management Information | = Protocol Gemeinsames Management-Informations-Protokoll |
| CMIS | Common Management Information Services | = Gemeinsame Management-Informations-Services |
| CPU | Central Processing Unit | = Zentrale Verarbeitungseinheit |
| DPWS | Devices Profile for Web Services | = Geräte-Profil für Web-Services |
| DSS | Decision Support System | = Entscheidungs-Unterstützungs-System |
| DTD | Document Type Definition | = Dokumenten-Typ-Definition |
| ERP | Enterprise Resource Planning | = Unternehmens-Ressourcen-Planung |
| FIPA | Foundation for Intelligent Physical | = Agents Stiftung für intelligente physikalische Agenten |
| HTTP | Hypertext Transfer Protocol | = Hypertext-Transfer-Protokoll |
| IP | Internet Protocol | = Internet-Protokoll |
| MAS | Multi-Agent System | = Multi-Agenten-System |
| OPC | Open Connectivity, ehemals "OLE for Process Control" | = Offene Verbindung, ehemals "OLE für Prozess-Steuerung" |
| OPC-UA | OPC Unified Architecture | = OPC UA Einheitliche Architektur |
| OWL | Web Ontology Language | = Web-Ontologie-Sprache |
| OWL-S | Upper Ontology for Semantic Web Services | = höhere Ontologie für semantische Web-Services |
| QoS | Quality of Service | = Qualität von Services |
| RFID | Radio-Frequency IDentification | =Funkfrequenz-Identifikation |
| SOA | Service-oriented Architecture | = Service-orientierte Architektur |
| SOAP | ehemals Simple Object Access Protocol | = ehemals einfaches Objekt Zugriffs-Protokoll |
| SWRL | Semantic Web Rule Language | = Semantische Web-Regel-Sprache |
| SWS | Semantic Web Services | = Semantische Web-Services |
| SWSO | Semantic Web Service Ontology | = Semantische Web-Service-Ontologie |
| | | |
| TCP | Transport Control Protocol | = Transport-Steuerungs-Protokoll |
| | | |
| UDP | User Datagram Protocol | = Benutzer-Datengramm-Protokoll |
| UML | Unified Modeling Language | = Einheitliche Modelierungs-Sprache |
| URI | Uniform Resource Identifier | = Gleichförmiger Resourcen-Identifier |
| | Web Based Enterprise Management | = Web-basiertes Unternehmens-Management |
| WS-BPEL | Business Process Execution Language for Web Services | = Unternehmens-Prozess-Ausführungssprache für Web-Services |
| WSCI | Web Services Choreography Interface | = Web-Service-Choreografie-Interface |
| WSDL | Web Service Description Language | = Web-Service-Beschreibungs-Sprache |
| WSDM | Web Services Distributed Management | = Web-Service-Verteilungs-Management |
| WSMO | Web Service Modeling Ontology | = Web-Service-Modellierungs-Ontologie |
| WSO | Web Service Orchestration | = Web-Service-Orchestration |
| WSOL | Web Service Orchestration Language | = Web-Service-Orchestrations-Sprache |
| | | |
| XML | eXtensible Markup Language | = Erweiterte Auszeichnungs-Sprache |

## Patentansprüche

1. Verfahren zur Konfiguration von SoA-basierten Automatisierungsgeräten (STB) mit eingebetteter High-Level-Petri-Netz-(HLPN) Orchestrierungs-Maschine (OE) zur Steuerung mechatronischer Komponenten (C1-C11, L1, L2, W 1, W2, MC) eines Automatisierungssystems (DAS), umfassend die Verfahrensschritte:
- Generieren von HLPN-Komponentenmodellen (CM) für jeden Typ der mechatronischen Komponenten (C1-C11, L1, L2, W1, W2, MC) des Automatisierungssystems (DAS),
- Erstellen eines Komponenten-Instanzmodells (CIM) aus einem HLPN-Komponentenmodell (CM) für jede physikalisch vorhandene mechatronische Komponente (C1-C11, L1, L2, W1, W2, MC),
- Erstellung einer Layout-Konfigurationsdatei (LCF), welche Beziehungen zwischen den Komponenten-Instanzmodellen (CIM) beschreibt,
- Komposition der Komponenten-Instanzmodelle (CIM) zu zumindest einem Systemmodell (SM) auf Basis der Layout-Konfigurationsdatei (LCF), wobei Logik-Ports der Komponenten-Instanzmodelle (CIM) miteinander verbunden/verknüpft werden,
- Generieren von Konfigurationsdateien (CF) auf der Basis des zumindest einen Systemmodells (SM) sowie Gerätebeschreibungsdateien und WSDL-Dateien der Komponenten-Instanzmodelle (CIM), wobei die Konfigurationsdateien zumindest eine Geräte-Konfigurationsdatei und eine Service-Konfigurationsdatei umfassen,
- Laden der Konfigurationsdateien in die die HLPN-Orchestrierungsmaschine (OE) enthaltenden-Automatisierungsgeräte (STB_PNE), wobei die Service-Konfigurations-Datei Daten zu gehosteten Service-Informationen mit benötigten Discovery-Hints oder eine Service-Endpunktadresse für die HLPN-Orchestrierungs-Maschine umfasst, um referenzierte Komponenten-Dienste aufzulösen und wobei die Geräte-Konfigurations-Datei eine Service-Klassen-Descriptor mit referenzierten Porttypen und eine Modelldarstellung umfasst,
- Ausführen der Konfigurationsdateien durch die verteilten HLPN-Orchestrierungs-Maschinen (OE) der Automatisierungsgeräte (STB_PNE)

2. Verfahren nach Anspruch 1,
**dadurch gekennzeichnet,**
**dass** als Layout-Konfigurationsdatei (LCF, CF) eine XML-basierte Datei wie XRC-Datei verwendet wird.

3. Verfahren nach Anspruch 1 oder 2,
**dadurch gekennzeichnet,**
**dass** die Layout-Konfigurationsdatei (LCF, CF) manuell oder automatisiert, vorzugsweise mittels eines Text-Editors erstellt wird.

4. Verfahren nach zumindest einem der vorhergehenden Ansprüche,
**dadurch gekennzeichnet,**
**dass** für jede Mechatronik-Komponente ein einzelnes Komponentenmodell erstellt wird, wobei jede Modellinstanz mit einem korrekten und verbindlichen Referenznamen konfiguriert wird.

5. Verfahren nach zumindest einem der vorhergehenden Ansprüche,
**dadurch gekennzeichnet,**
**dass** die Gerätebeschreibungsdateien einen 1:1-Link zwischen den verbindlichen Referenznamen der Modelle und reellen DPWS-Geräten/-Diensten herstellen.

6. Verfahren nach zumindest einem der vorhergehenden Ansprüche,
**dadurch gekennzeichnet,**
**dass** sämtliche im System vorhandenen DPWS-Geräte manuell oder mittels eines Netzwerk-Scan-Vorgangs erfasst werden, wobei lokale Gerätebeschreibungsdateien mit Gerätetyp, Betriebsverwendung, Adresse und Beschreibungsnamen erfasst werden.

7. Verfahren nach zumindest einem der vorhergehenden Ansprüche,
**dadurch gekennzeichnet,**
**dass** eine Verbindung zum verbindlichen Referenznamen durch Umbenennen der jeweiligen Geräte-Datei erzeugt wird.

8. Verfahren nach zumindest einem der vorhergehenden Ansprüche,
**dadurch gekennzeichnet,**
**dass** das zum Einsatz kommende System-Modell als DPWS-Gerät dargestellt wird, wobei eine Gerätebeschreibungsdatei von einer Vorlagen-Generator-Batch-Datei erzeugt wird.

9. Verfahren nach zumindest einem der vorhergehenden Ansprüche,
**dadurch gekennzeichnet,**
**dass** die Dateien auf einen HTTP-Web-Server gehostet werden und dass auf die Dateien über URL zugegriffen wird.

10. Verfahren nach zumindest einem der vorhergehenden Ansprüche,
**dadurch gekennzeichnet,**
**dass** die Erstellung des Komponenten-Instanzmodells durch Kopieren des Gerätetypmodells und Anpassen eines Referenznamens entsprechend eines Gerätebeschreibungs-Datei-Namens erfolgt, der mit der Geräteinstanz assoziiert wird.

11. Verfahren nach zumindest einem der vorhergehenden Ansprüche,
**dadurch gekennzeichnet,**
**dass** das Automatisierungsgerät oder der Simulator mit einer Geräte-UUID identifiziert wird und/oder dass das Automatisierungsgerät implementierte DPWS-fähige Geräte benötigt bzw. enthält.

12. Fertigungsverfahren (DAS) zur Fertigung von Produkten durch Zusammenwirken einer Mehrzahl von mechatronischen Komponenten bzw. Geräten (C1-C11, L1, L2, W1, W2) wie z. B. Transporteinheiten, Lifter, Arbeitsstationen,
wobei eine Gruppe von mechatronischen Komponenten bzw. Geräten oder eine mechatronische Komponente bzw. ein mechatronisches Gerät jeweils von einem Automatisierungsgerät (STB) gesteuert wird,
wobei die Automatisierungsgeräte (STB) über ein Netzwerk (N) miteinander und mit einem Produktions-Ausführungs-System (PES) Service-orientiert kommunizieren,
wobei das einer mechatronischen Komponente bzw. Gerät oder einer Gruppe von mechatronischen Komponenten bzw. Geräten zugeordnete Automatisierungsgerät (STB) derart konfiguriert wird, dass die mechatronischen Komponente bzw. das Gerät oder die Gruppe von mechatronischen Komponenten bzw. Geräten als logisches Gerät und Funktionen der mechatronischen Komponente bzw des Geräts oder der Gruppe von mechatronischen Komponenten bzw. Geräten als Elementar-Service (S) in dem Netzwerk (N) angeboten und aufgerufen werden,
wobei zur Durchführung des Fertigungsverfahren zumindest zwei Service-Orchestrierungs-Engines (OE) vorgesehen sind, wobei jede Service-Orchestrierungs-Engine (OE) derart konfiguriert wird, dass Elementar-Services (S) einer fertigungstechnisch zusammengehörigen Gruppe von mechatronischen Komponenten bzw. Geräten auf der Grundlage von miteinander verbundenen bzw. synchronisierten Orchestrierungs- bzw. Verhaltensmodellen orchestriert werden und in dem Netzwerk (N) dargestellt werden,
**dadurch gekennzeichnet,**
**dass** die Orchestrierungs- bzw. Verhaltensmodelle über Ports miteinander verbunden werden, wobei ein Modell erzeugt wird, welches auf der Verbindung einzelner Verhaltensmodelle von Gruppen mechatronischer Komponenten basiert, wobei für die Verbindung der Modelle Daten in den zugrunde liegenden Petri-Netz-Modellen gesetzt werden und wobei eine Verbindungsdatei wie XML-Datei definiert wird, in der beschrieben ist, welche Modelle über welche Ports verbunden werden und
**dass** die Orchestrierungsmodelle über Ports miteinander verbunden werden, wobei eine wechselseitige Kommunikation von mehreren Orchestrierungs-Engines (OE) und ihrer jeweiligen Modelle über das Anbieten und Nutzen von Services über einen Service-Anfrage-/Service-Antwort-/Event-Mechanismus durchgeführt wird.

## Claims

1. Method for configuring SoA-based automation device (STB) with embedded High-Level Petri Net (HLPN) Orchestration Engine (OE) for controlling mechatronic components (C1-C11, L1, L2, W1, W2, MC) of an automation system (DAS) comprising the method steps:
- Generation of HLPN component models (CM) for each type of the mechatronic components (C1-C11, L1, L2, W1, W2, MC) of the automation system (DAS),
- Creation of a Component Instance Model (CIM) from an HLPN component model (CM) for each physically present mechatronic component (C1-C11, L1, L2, W1, W2, MC),
- Creation of a Layout Configuration File (LCF), which describes relationships between the Component Instance Models (CIM),
- Composition of the Component Instance Models (CIM) to form at least one System Model (SM) based on the Layout Configuration File (LCF), such that logic ports of the Component Instance Models (CIM) are interconnected/linked to one another,
- Generation of configuration files (CF) on the basis of the at least one System Model (SM) as well as Device Descriptor Files and WSDL files of the Component Instance Models (CIM), with the configuration files including at least one device configuration file and one service configuration file,
- Loading the configuration files into the automation devices (STB_PNE) containing the HLPN orchestration engine (OE), with the service configuration files comprising data on hosted service information with the required discovery hints or a service endpoint address for the HLPN orchestration engine to resolve referenced component services, and with the device configuration file having a service class descriptor with referenced types of ports and a model representation,
- Execution of the configuration files by the distributed HLPN orchestration engines (OE) of the automation devices (STB_PNE).

2. Method according to Claim 1,
**characterized in**
**that** as Layout Configuration File (LCF, CF) is used an XML-based file such as XRC file.

3. Method according to Claim 1 or 2,
**characterized in**
**that** the Layout Configuration File (LCF, CF) is created manually or automatically, preferably using a text editor.

4. Method according to at least one of the preceding claims,
**characterized in**
**that** a single-component model is created for each mechatronic component, with each model instance being configured with a correct and binding reference name.

5. Method according to at least one of the preceding claims,
**characterized in**
**that** the Device Descriptor Files establish a 1:1 link between the binding reference names of the models and the actual DPWS devices/services.

6. Method according to at least one of the preceding claims,
**characterized in**
**that** all the DPWS devices present in the system are detected manually or by means of a network scan operation, wherein local device descriptor files are acquired with the type of device, operational use, address and descriptive name.

7. Method according to at least one of the preceding claims,
**characterized in**
**that** a link to the binding reference name is created by renaming the respective device file.

8. Method according to at least one of the preceding claims,
**characterized in**
**that** the system model being used is represented as a DPWS device, with a device descriptor file being generated by a template generator batch file.

9. Method according to at least one of the preceding claims,
**characterized in**
**that** the files are hosted on an HTTP web server and that the files are accessed via URL.

10. Method according to at least one of the preceding claims,
**characterized in**
**that** the component instance model is created by copying the device type model and adjusting a reference name according to a device descriptor file name which is associated with the device instance.

11. Method according to at least one of the preceding claims,
**characterized in**
**that** the automation device or the simulator are identified with a device UUID and/or that the automation device requires, respectively contains implemented DPWS-capable devices.

12. Manufacturing system (DAS) for manufacturing products by cooperation of a plurality of mechatronic components, respectively devices (C1-C11, L1, L2, W1, W2, MC) such as transport units, lifters or workstations,
with a group of mechatronic components, respectively devices or a mechatronic component, respectively a mechatronic device each being controlled by an automation device (STB),
with the automation devices (STB) communicating service-oriented via a network (N) with each other or with a production execution system (PES),
with the automation device (STB) assigned to a mechatronic component, respectively device or to a group of mechatronic components, respectively devices being configured such that the mechatronic components, respectively the device or the group of mechatronic components, respectively devices are offered and retrieved in the network (N) as a logic device and functions of the mechatronic components, respectively of the devices or the group of mechatronic components, respectively devices are offered and retrieved in the network (N) as elementary services (S),
with at least two Service Orchestration Engines (OE) being provided for implementing the manufacturing system (DAS), with each Service Orchestration Engine (OE) being configured such that elementary services (S) of a group of mechatronic components, respectively devices belonging together from the standpoint of manufacturing technology are orchestrated and represented in the network (N) on the basis of interconnected, respectively synchronized orchestration models, respectively behavior models,
**characterized in**
**that** the orchestration models, respectively behavior models are interconnected via ports, with a model being generated that is based on the connection of single behavior models of groups of mechatronic components, with - for the connection of the models - data being set into the underlying Petri-Net-Models, and with a connection file such as an XML file being defined, in which there is a description of which models are connected over which ports, and
**that** the orchestration models are interconnected via ports, with a mutual communication of multiple orchestration engines (OE) and their respective models being performed by offering and using a service by a service inquiry/service response/event mechanism.

## Revendications

1. Procédé de configuration d'appareils d'automatisation à base SoA (STB) avec une machine d'orchestration (OE) intégré réseau de Pétri de haut niveau (HLPN) pour la commande de composants mécatroniques (C1-C11, L1, L2, W1, W2, MC) d'un système d'automatisation (DAS), comprenant les étapes suivantes :
- génération de modèles de composants HLPN (CM) pour chaque type de composants mécatroniques (C1-C11, L1, L2, W1, W2, MC) du système d'automatisation (DAS) ;
- création d'un modèle d'instance de composants (CIM) à partir d'un modèle de composants HLPN (CM) pour chaque composant mécatronique physiquement présent (C1-C11, L1, L2, W1, W2, MC) ;
- création d'un fichier de configuration de mise en page (LCF) décrivant les relations entre les modèles d'instance de composants (CIM) ;
- composition de modèles d'instance de composants (CIM) sous forme d'au moins un modèle de système (SM) sur la base du fichier de configuration de mise en page (LCF), sachant que les ports logiques des modèles d'instance de composants (CIM) sont reliés/combinés les uns aux autres ;
- génération de fichiers de configuration (CF) sur la base d'au moins un modèle de système (SM) ainsi que de fichiers de description des appareils et de fichiers WSDL des modèles d'instance de composants (CIM), sachant que les fichiers de configuration comprennent au moins un fichier de configuration des appareils et un fichier de configuration des services ;
- chargement des fichiers de configuration dans les appareils d'automatisation (STB_PNE) contenant la machine d'orchestration HLPN (OE), sachant que le fichier de configuration des services comprend ou des données relatives aux informations de service hébergées avec les « discovery hints » nécessaires, ou une adresse du point de terminaison du service pour la machine d'orchestration HLPN, afin de déterminer les services des composants référencés, et sachant que le fichier de configuration des appareils comprend un descripteur des catégories de services avec des types de ports référencés ainsi qu'une présentation de modèle ;
- exécution des fichiers de configuration par les machines d'orchestration HLPN (OE) des appareils d'automatisation (STB_PNE), lesdites machines étant réparties.

2. Procédé selon la revendication 1,
**caractérisé en ce**
**qu'**un fichier basé sur XML, comme un fichier XRC, est utilisé comme fichier de configuration de mise en page (LCF, CF).

3. Procédé selon la revendication 1 ou 2,
**caractérisé en ce**
**que** le fichier de configuration de mise en page (LCF, CF) est créé de préférence à l'aide d'un éditeur de texte de façon manuelle ou automatisée.

4. Procédé selon au moins l'une des précédentes revendications,
**caractérisé en ce**
**qu'**un modèle de composant individuel est créé pour chaque composant mécatronique, sachant que chaque instance de modèle est configurée avec un nom de référence correct et contraignant.

5. Procédé selon au moins l'une des précédentes revendications,
**caractérisé en ce**
**que** les fichiers de description des appareils établissent un lien 1:1 1 entre les noms de référence contraignants des modèles et des services/appareils réels DPWS.

6. Procédé selon au moins l'une des précédentes revendications,
**caractérisé en ce**
**que** tous les appareils DPWS présents dans le système sont saisis manuellement ou par le biais d'une opération de scrutation du réseau, sachant que les fichiers de description des appareils locaux sont saisis en incluant le type d'appareil, l'utilisation opérationnelle, l'adresse et le nom du descriptif.

7. Procédé selon au moins l'une des précédentes revendications,
**caractérisé en ce**
**qu'**un lien avec le nom de référence contraignant est créé par le fait de renommer le fichier respectif des appareils.

8. Procédé selon au moins l'une des précédentes revendications,
**caractérisé en ce**
**que** le modèle du système employé est présenté comme appareil DPWS, sachant qu'un fichier de description des appareils est généré par un fichier batch générateur de modèles.

9. Procédé selon au moins l'une des précédentes revendications,
**caractérisé en ce**
**que** les fichiers sont hébergés sur un serveur web HTTP et que l'accès aux fichiers est réalisé via une URL.

10. Procédé selon au moins l'une des précédentes revendications,
**caractérisé en ce**
**que** la création du modèle d'instance de composants se fait par copie du modèle de l'appareil et par l'adaptation d'un nom de référence en fonction du nom du fichier de description de l'appareil, lequel nom est associé à l'instance de l'appareil.

11. Procédé selon au moins l'une des précédentes revendications,
**caractérisé en ce**
**que** l'appareil d'automatisation ou le simulateur est identifié par une UUID d'appareil et/ou que l'appareil d'automatisation requiert ou contient des appareils implémentés compatibles DPWS.

12. Procédé de fabrication (DAS) pour la fabrication de produits par interaction d'une multitude de composants ou d'appareils mécatroniques (C1-C11, L1, L2, W1, W2), tels que des unités de transport, des élévateurs, des postes de travail,
sachant qu'un groupe de composants ou d'appareils mécatroniques ou un seul composant mécatronique ou appareil mécatronique sont respectivement commandés par un appareil d'automatisation (STB),
sachant que les appareils d'automatisation (STB) communiquent ensemble via un réseau (N) et à l'aide d'un système d'exécution de la production (PES) orienté sur le service,
sachant qu'un appareil d'automatisation (STB) affecté à l'un des composants ou appareils mécatroniques ou l'un des groupes de composants ou d'appareils mécatroniques est configuré de telle sorte que le composant ou l'appareil mécatroniques ou le groupe de composants ou d'appareils mécatroniques sont proposés et appelés comme appareil logique et que les fonctions des composants ou de l'appareil mécatronique ou du groupe de composants ou d'appareils mécatroniques sont proposés et appelés comme service élémentaire (S) dans le réseau (N),
sachant qu'il est prévu au moins deux machines d'orchestration de services (OE) pour l'exécution du procédé de fabrication, sachant que chaque machine d'orchestration de services (OE) est configurée de telle sorte que les services élémentaires (S) d'un groupe de composants ou d'appareils mécatroniques connexe sur le plan productif sont orchestrés sur la base de modèles d'orchestration ou de comportement reliés ou synchronisés les uns aux autres et sont représentés dans le réseau (N),
**caractérisé en ce**
**que** les modèles d'orchestration ou de comportement sont reliés les uns aux autres par des ports, sachant qu'il est généré un modèle basé sur la connexion de modèles de comportement individuels de groupes de composants mécatroniques, sachant que pour la connexion des modèles, des données sont placées dans les modèles de réseau de Pétri sous-jacents et sachant qu'il est défini un fichier de connexion, comme un fichier XML, dans lequel il est décrit quels modèles sont connectés via quels ports, et
**que** les modèles d'orchestration sont reliés les uns aux autres via des ports, sachant qu'une communication bidirectionnelle de plusieurs machines d'orchestration (OE) et de leurs modèles respectifs est réalisée par le biais de l'offre et de l'utilisation de services via un mécanisme événementiel demande du service/réponse du service.
